(19) Europäisches Patentamt
European Patent Office
Office européen des brevets

(11) EP 0 885 251 B1

(12) EUROPÄISCHE PATENTSCHRIFT

(45) Veröffentlichungstag und Bekanntmachung des Hinweises auf die Patenterteilung:
**16.08.2001 Patentblatt 2001/33**

(21) Anmeldenummer: **97907077.8**

(22) Anmeldetag: **06.03.1997**

(51) Int Cl.7: **C08G 61/12**, C07F 7/22

(86) Internationale Anmeldenummer:
**PCT/EP97/01140**

(87) Internationale Veröffentlichungsnummer:
**WO 97/32914 (12.09.1997 Gazette 1997/39)**

(54) **SUBSTITUIERTE POLYTHIOPHENE, VERFAHREN ZU DEREN HERSTELLUNG, UND DEREN VERWENDUNG**

SUBSTITUTED POLYTHIOPHENES, PROCESSES FOR THEIR PREPARATION AND THEIR USE

POLYTHIOPHENES SUBSTITUES, LEURS PROCEDES DE PREPARATION ET LEUR UTILISATION

(84) Benannte Vertragsstaaten:
**DE FR GB**

(30) Priorität: **06.03.1996 DE 19608701**

(43) Veröffentlichungstag der Anmeldung:
**23.12.1998 Patentblatt 1998/52**

(73) Patentinhaber: **BASF AKTIENGESELLSCHAFT**
**67056 Ludwigshafen (DE)**

(72) Erfinder:
- **MÖHWALD, Helmut**
**D-76855 Annweiler (DE)**
- **BELOV, Vladimir**
**St. Petersburg, 19890 (RU)**
- **SCHROF, Wolfgang**
**D-67271 Neuleiningen (DE)**

(74) Vertreter: **Isenbruck, Günter, Dr.**
**Patent- Rechtsanwälte**
**Bardehle und Partner,**
**Galileiplatz 1**
**81679 München (DE)**

(56) Entgegenhaltungen:
**DE-A- 4 414 255**

- **Week 8532 2.Oktober 1985 Derwent Publications Ltd., London, GB; AN 85-193486 XP002035126 "Electrically conductive copolymer prepn. by solvent copolymerisation of five membered heterocyclic monomers." & JP 60 120 722 A (MATSUSHITA ELEC IND KK) , 28.Juni 1985**
- **JOURNAL OF ORGANIC CHEMISTRY, Bd. 60, Nr. 21, 1995, EASTON US, Seiten 6813-6819, XP002035121 L.L.MILLER ET ALL.: "Synthesis of beta-Methoxy,Methyl-capped alpha-Oligothiophenes"**
- **JOURNAL OF THE CHEMICAL SOCIETY, CHEMICAL COMMUNICATIONS, Nr. 10, 21.Mai 1996, LETCHWORTH GB, Seiten 1167-1168, XP002035122 BONG SOO KANG ET ALL.: "Wavelength tuning of light-emitting polyarenes via m-phenylene interrupting block: pi-pi* band-gap adjustment of thiophene-based conjugated polymers."**
- **PATENT ABSTRACTS OF JAPAN vol. 014, no. 294 (C-0732), 26.Juni 1990 & JP 02 092922 A (CANON INC), 3.April 1990,**
- **BULLETIN DE LA SOCIETE CHIMIQUE DE FRANCE, 1986, PARIS FR, Seiten 267-275, XP002035123 F.OUTURQUIN: "Etude des propriétés ènamiques de l'amino-3 thiophène et du diamino-3,4 thiophène"**
- **JOURNAL OF THE CHEMICAL SOCIETY, CHEMICAL COMMUNICATIONS, Nr. 22, 15.November 1992, LETCHWORTH GB, Seiten 1672-1673, XP002035124 M. POMERANTZ ET ALL.: "Poly(2,3-dihexylthieno[3,4-b]pyrazine). A New Processable Low Band-gap Polyhetrocycle"**
- **BULLETIN DE LA SOCIETE CHIMIQUE DE FRANCE 2 PARTIE - CHIMIE ORGANIQUE, BIOCHIMIE., Juni 1983 - Juli 1983, PARIS FR, Seiten 159-163, XP002035125 F.OUTURQUIN ET ALL.: "Synthèse de nouveaux systèmes thiophéniques azotés à partir du diamino-3,4 thiophène"**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 885 251 B1

## Beschreibung

Die vorliegende Erfindung betrifft ein Polythiophen, enthaltend Struktureinheiten der allgemeinen Formeln (I) und (II)

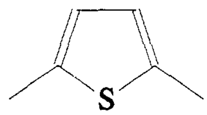

(I)

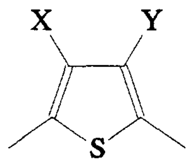

(II)

wobei

X und Y unabhängig voneinander gleich oder verschieden sein können und eine lineare oder verzweigtkettige $C_1$- bis $C_{22}$-Alkylgruppe; eine lineare oder verzweigtkettige $C_1$- bis $C_{22}$-Alkoxygruppe; eine lineare oder verzweigtkettige $C_1$- bis $C_{22}$-Alkyloxyalkylgruppe; eine lineare oder verzweigtkettige $C_1$- bis $C_{22}$-Acylgruppe; eine lineare oder verzweigtkettige $C_1$- bis $C_{22}$-Thioacylgruppe; eine lineare oder verzweigtkettige $C_1$- bis $C_{22}$-Acyloxygruppe; eine lineare oder verzweigtkettige $C_1$- bis $C_{22}$-Thioacyloxygruppe; eine $C_5$- bis $C_8$-Cycloalkylgruppe, eine $C_6$- bis $C_{18}$-Arylgruppe oder eine $C_5$- bis $C_8$-heterocyclische Gruppe, die jeweils wiederum mit einer oder mehreren linearen oder verzweigtkettigen $C_1$- bis $C_{22}$-Alkylgruppe(n), einer oder mehreren linearen oder verzweigtkettigen $C_1$- bis $C_{22}$-Alkoxygruppe(n), einer oder mehreren linearen oder verzweigtkettigen $C_1$- bis $C_{22}$-Alkyloxyalkylgruppe(n), einer oder mehreren linearen oder verzweigtkettigen $C_1$- bis $C_{22}$-Acylgruppe(n) oder einer oder mehreren linearen oder verzweigtkettigen $C_1$-bis $C_{22}$-Thioacylgruppe(n) substituiert sein können; $NO_2$; oder $NHR^1$, wobei $R^1$ gleich oder verschieden sein kann und jeweils Wasserstoff; oder eine lineare oder verzweigtkettige $C_1$- bis $C_{22}$-Alkylgruppe, eine lineare oder verzweigtkettige $C_1$- bis $C_{22}$-Alkoxygruppe, eine lineare oder verzweigtkettige $C_1$- bis $C_{22}$-Alkyloxyalkylgruppe, eine lineare oder verzweigtkettige $C_1$- bis $C_{22}$-Acylgruppe oder eine lineare oder verzweigtkettige $C_1$- bis $C_{22}$-Thioacylgruppe ist, bedeuten, oder

X und Y zusammen mit den Atomen, an die sie gebunden sind, ein Kohlenstoff enthaltendes Ringsystem bilden, das neben Kohlenstoff Stickstoff (N)-, Sauerstoff (O)-, Schwefel (S)- oder Phosphor (P)-Heteroatome oder Mischungen zweier oder mehrerer dieser Heteroatome aufweist,

wobei dieses Ringsystem wiederum an dem (den) Kohlenstoffatom(en), dem (den) Stickstoffatom(en) oder dem (den) Phosphoratom(en) jeweils mit einer Gruppe Z substituiert sein kann, in der jedes Z unabhängig voneinander eine Gruppe wie oben für X und Y definiert bedeutet, oder

zwei benachbarte Gruppen Z zusammen einen durch eine der folgenden allgemeinen Formeln (III) bis (VI) dargestellten Reste bilden

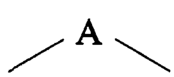

(III)

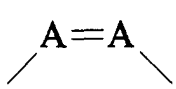

(IV)

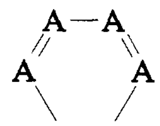

(V)

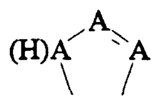

(VI)

in denen A Kohlenstoff (C), Stickstoff (N), Phosphor (P) oder Mischungen zweier oder mehrerer dieser Atome bedeutet, wobei, sofern A Kohlenstoff ist, jedes dieser A entweder ein Wasserstoffatom trägt oder wiederum wie oben für X und Y definiert, substituiert sein kann,

- erhältlich mittels

der Umsetzung nach Stille, wobei 2,5-Dihalogenthiophen oder 2,5-Ditriflatthiophen und an den dem Schwefel benachbarten Kohlenwasserstoffatomen bis(Trialkylzinn)-substituierte Thiophenderivate, die der oben definierten Struktureinheit (II) entsprechen, miteinander in geeigneten Pd(0)- oder Pd(II)-Komplexen als Katalysator umgesetzt werden oder wobei 2,5-Bis(trialkylzinn)thiophen und an den dem Schwefel benachbarten Kohlenstoffatomen bis(Halogen)- oder bis(Trifalt)-substituierte Thiophenderivate, die der oben definierten Struktureinheit (II) entsprechen, miteinander in geeigneten Lösungsmitteln in Anwesenheit von geeigneten Pd(0)- oder Pd(II)-Komplexen als Katalysator umgesetzt werden,
oder,

der Suzuki-Umsetzung, in der 2,5 Dihalogen- oder 2,5-Triflat-substituierte Thiophene, die der Struktureinheit (II) entsprechen, mit Thiophendiborsäure oder Thiophendiborsäureestern in Anwesenheit einer Base und eines Palladium-Komplexes der Struktur $PdL_4$ (L = Ligant), oder 2,5-Dihalogen- oder 2,5-Triflat-substituiertes Thiophen mit einem Diborsäureoder Diborsäureesterderivat eines substituierten Thiophens, das der Struktureinheit (II) entspricht, in Anwesenheit einer Base und eines Palladium-Komplexes, wie oben definiert, umgesetzt werden.

Ferner betrifft sie Verfahren und beschreibt Monomere zur Herstellung eines Polythiophens, dessen Verwendung in verschiedenen technischen Gebieten, sowie ein elektrisch leitfähiges Material, das mindestens ein erfindungsgemäßes Polythiophen enthält.

Polythiophene stellen eine wichtige Klasse konjugierter Polymere mit hoher elektrischer Leitfähigkeit und nicht-linearen optischen Eigenschaften dar und können als Materialien für Halbleiter verwendet werden (s.u.a. EP-B-0 332 704 und P.N. Prasad, D.J. Williams "Introduction to NLO effects in molecules and polymers", John Wiley and Sons, Inc. (1991)). Ferner besitzen die Polythiophene Elektrochromie- und antistatische Eigenschaften ° (s. N. Arsalani und K.E. Geckeler "Conducting isopolymers: peparation, properties, and applications", J. Prakt. Chem. 337 (1995, S. 1-11).

Bislang sind fast ausschließlich Homopolymere von Thiophen oder substituierten Thiophenen bekannt. Dabei wurden meist lediglich einfache 3-Alkyloder 3,4-Dialkylthiophene polymerisiert und bezüglich möglicher technischer Anwendungen untersucht. Ein Überblick über die bislang hergestellten Polythiophene und die am häufigsten verwendeten Verfahren zu ihrer Herstellung geben Hans R. Kricheldorf "Handbook of polymer synthesis", Teil B, S. 1383-1390 (1992), M. Pomerantz "Processable polymers and copolymers of 3-alkylthiophenes and their blends", Synthetic Metals, 41-43 (1991), S. 825-830, und EP-A-0 339 340.

So beschreibt die J 60 120 722 lineare Copolymere, die 5-gliedrige heterocyclische Verbindungen mit funktionellen Gruppen, die ausgewählt werden unter Halogen-, Hydroxyl-, Amino- oder Kohlenwasserstoff-Gruppen, wie darin definiert, aufweisen. Hergestellt werden diese Copolymere mittels anodischer Oxidation.

Die JP 63 344 578 betrifft die Herstellung eines elektrisch leitfähigen Polymers, das aus 3,4-substituierten heterocyclischen 5-gliedrigen Ringverbindungen aufgebaut ist, durch Polymerisation in Gegenwart eines Oxidationsmittels, wie z.B. Eisenchlorid, in einem organischen Lösungsmittel.

$\alpha$-Stannylthiophen der Formel $(n\text{-Butyl})_3Sn\text{-}(C_4H_2S)_3\text{-}Sn(n\text{-Butyl})_3$ ist in J. Org. Chem. 1995, 60, S. 6813-6819 beschrieben.

In "Bulletin de la Société Chimique de France, 1986, Nr. 2, S. 267-275" wird das 2,5-Dibromo-3,4-diacetaminothiophen sowie dessen Herstellung beschrieben.

In "Bulletin de la Société Chimique de France, 1983, Nr. 5-6, S. II 159-II 163" werden das unsubstituierte Thieno[3,4-b]pyrazin, sowie das in 2-oder 3-Stellung durch eine Methylgruppe sowie das in 2- und 3-Stellung durch jeweils eine Methylgruppe substituierte Derivat sowie deren Herstellung beschrieben.

Lösliche Poly(2,3-dihexylthieno[3,4-b]pyrazine wurden von M. Pomerantz et al. durch Eisenchlorid-Sauerstoff-Polymerisation der entsprechenden Monomere (s. M. Pomerantz "New processable low band-gap, conjugated polyheterocycles", Synthetic Metals, 55-57, S. 960-965 (1993) und J.Chem.Soc.Commun. 1992, S. 1672-1673) dargestellt. Durch dieses Verfahren können lediglich dotierte Substanzen hergestellt werden. Selbst nach der Behandlung mit wäßrigem Ammoniak oder Hydrazin wurde ein EPR-Signal und Linienverbreiterung in den NMR-Spektren beobachtet, was das Vorhandensein von paramagnetischen Spezies andeutet.

Als Verfahren zu ihrer Herstellung wurden bislang hauptsächlich chemische (z.B. mittels $FeCl_3$) oder elektrochemische Oxidation eines einzelnen Vorläufers oder eines Gemisches zweier verschiedener 3-Alkylthiophene (s. M. Pomerantz "Processable polymers and copolymers of 3-alkylthiophenes and their blends", Synthetic Metals, 41-43 (1991), S. 825-830, insbesondere S. 828, und M. Berggren et al. "Light-emitting diodes with variable colours from polymer blends", Nature, 372 (1994), S. 444-446, insbesondere S. 444), unter Bildung der entsprechenden, in der 2,5-Position verknüpften Polymere durchgeführt.

Ein weiterer, allgemeiner Ansatz zur Herstellung von Oligo- oder Polythiophenen schließt die katalytische Kupplung metallorganischer Reagenzien (meist Grignard-Reagenzien) ein (s. Kricheldorf, a.a.O.).

Dabei ist jedoch zu beachten, daß innerhalb dieses Verfahrens Thiophene mit funktionellen Gruppen, wie z. B. Nitro-, Carbonyl-, Imino-, Amido-, Nitril-, Pyridin- und Pyrazingruppen, nicht eingesetzt werden können.

Ein relativ neues Verfahren zur Herstellung neuer C—C-Verknüpfungen stellt die sogenannte Stille-Umsetzung dar. Gemäß dieser Umsetzung wird ein organisches Elektrophil mit einem Organozinnreagenz in Anwesenheit eines geeigneten Lösungsmittels und eines Pd(0)- oder Pd(II)-Komplexes umgesetzt (s. J.K. Stille "The palladium-catalysed cross-coupling reactions of organotin reagents with organic electrophils", Angew. Chem. Int. Ed. Engl. 25, S. 508-542 (1986). Diese Umsetzung wurde bereits erfolgreich zur Herstellung von Poly(2,5-thieno-1,4-phenylenen) durchgeführt (s. Z. Bao et al., J. Am. Chem. Soc., 117, 12426-12435 (1995)).

Im allgemeinen führt die Dotierung zu neuen elektronischen Zuständen, die für bestimmte Anwendungen, wie z.B. höhere elektrische Leitfähigkeit, wünschenswert sind, jedoch für andere Anwendungen, wie z.B. die Herstellung dünner Filme mit guter optischer Qualität, unerwünscht sind. Die Eigenschaften dotierter Materialien ändern sich häufig in Abhängigkeit von der Zeit. Ferner ist die Reproduzierbarkeit ihrer Eigenschaften im allgemeinen ebenfalls geringer verglichen mit den Eigenschaften undotierter Substanzen.

Die Anforderungen, die an elektrisch leitfähige Materialien gestellt werden, steigen ständig. Nicht immer sind die bislang bekannten Polythiophene in der Lage, diesen Anforderungen gerecht zu werden.

Diese Überlegungen zeigen beispielhaft die Notwendigkeit, neue, bislang unbekannte dotierte und undotierte Copoly- und Co-Oligothiophene, die sowohl substituierte und unsubstituierte Struktureinheiten enthalten, zu entwikkeln. Solche Materialien, die, verglichen mit den bislang hergestellten Homopolythiophenen, andere und verbesserte Eigenschaften aufweisen, sollten in verschiedenen technischen Gebieten, wie z.B. als Substanzen mit Halbleiter-, Elektrochromie- oder antistatischen Eigenschaften oder als im nahen Infrarotbereich absorbierende Farbstoffe verwendbar sein.

Somit lag die Aufgabe der vorliegenden Erfindung in der Bereitstellung neuer Polythiophene, die mehr als eine voneinander verschiedene Struktureinheiten aufweisen und in vorteilhafter Weise wie oben skizziert in verschiedenen technischen Bereichen angewendet werden können.

Diese Aufgabe wird durch die im folgenden näher beschriebenen erfindungsgemäßen Polythiophene erfüllt.

Die in den erfindungsgemäßen Polythiophenen vorhandene Struktureinheit (I) leitet sich von Thiophen ab.

In der Struktureinheit (II), in der X und Y, sofern sie nicht zusammen mit den Atomen, an die sie gebunden sind, ein Kohlenstoff enthaltendes Ringsystem bilden, jeweils die eingangs erwähnten Gruppen darstellen können, ist es bevorzugt, daß X und Y gleich sind. Sofern X und Y jeweils die Gruppe $NHR^1$ darstellen, sind die beiden Reste $R^1$ vorzugsweise ebenfalls identisch. Unter den oben aufgelisteten Alkyl-, Alkoxy-, Alkyloxyalkyl-, Acyl- und Thioacylgruppen mit 1 bis 22 C-Atomen sind solche mit 1 bis 20 bevorzugt, solche mit 6 bis 20 Kohlenstoffatomen weiter bevorzugt und solche mit 10 bis 16 Kohlenstoffatomen besonders bevorzugt.

Als Substituenten X und Y besonders bevorzugt sind die oben definierten Acylgruppen, Thioacylgruppen und $NHR^1$.

Im Rahmen der vorliegenden Erfindung bezeichnet der Ausdruck "Thioacylgruppe" eine Gruppe der allgemeinen Formel -C(S)-R, wobei R Alkyl ist. Der Ausdruck "heterocyclische Gruppe", wie eingangs erwähnt, bezeichnet alicyclische gesättigte, alicyclische ungesättigte und aromatische heterocyclische Gruppen.

Ferner können X und Y zusammen mit den Atomen, an die sie gebunden sind, ein Kohlenstoff enthaltendes Ringsystem bilden, das neben Kohlenstoff Stickstoff (N)-, Sauerstoff (O)-, Schwefel (S)- oder Phosphor (P)-Heteroatome oder Mischungen zweier oder mehrerer dieser Heteroatome aufweist. Vorzugsweise bilden dabei X und Y einen zweiwertigen Rest, der zwei bis acht Atome, weiter bevorzugt drei bis sechs Atome, aufweist, und, zusammen mit den beiden Atomen, an die er gebunden ist, ein Ringsystem mit vier bis zehn bzw. fünf bis acht Atomen bildet. Die Anzahl der in diesem Ringsystem möglicherweise vorhandenen, oben definierten Heteroatome beträgt vorzugsweise bis zu drei, weiter bevorzugt bis zu zwei. Unter den oben definierten Heteroatomen ist Stickstoff (N) bevorzugt. Vorzugsweise handelt es sich bei dem oben beschriebenen Ringsystem um ein mindestens eine, weiter bevorzugt zwei oder mehr Doppelbindungen aufweisendes System. In besonders bevorzugten Ausführungsformen der vorliegenden Erfindung befinden sich die Doppelbindungen des obigen Ringsystems in Konjugation mit den Doppelbindungen des Thiophenfragments, an das das Ringsystem gebunden ist, und ggf. den Doppelbindungen weiterer an das oben beschriebene Ringsystem gebundener Reste der Formeln (III) bis (VI), wie in Anspruch 1 definiert.

Dieses Ringsystem kann wiederum an den Kohlenstoff-, Stickstoff- oder Phosphoratomen jeweils mit einer Gruppe Z substituiert sein, wobei jedes Z unabhängig voneinander eine Gruppe wie oben für X und Y definiert, bedeutet, und auch hier die für X und Y als bevorzugt angegebenen Substituenten wiederum als bevorzugt anzusehen sind.

Zwei benachbarte Gruppen Z können darüber hinaus zusammen einen Rest bilden, der ausgewählt wird unter den eingangs erwähnten Resten der allgemeinen Formeln (III) bis (IV), wobei die Platzhalter "A" Kohlenstoff (C), Stickstoff (N), Phosphor (P) oder Mischungen zweier oder mehrerer dieser Atome bedeuten, wobei, sofern A Kohlenstoff ist, dieser entweder ein Wasserstoffatom tragen oder wiederum, wie oben für X und Y definiert, substituiert sein kann. Dabei bilden diese Reste zusammen mit den Atomen, an die sie gebunden sind, einen weiteren Ring, der vorzugsweise mit den übrigen Ringen innerhalb der Struktureinheit ein konjugiertes, ungesättigtes System bildet.

Als bevorzugter, dabei entstehender Ring ist der Cyclobuten-Ring zu nennen.

Eine bevorzugte Gruppe der erfindungsgemäßen Polythiophene stellen solche mit Struktureinheiten der allgemeinen Formeln (VII) und/oder (VIII) dar

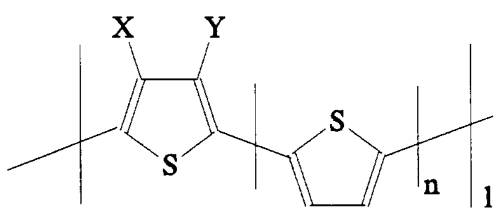

(VII)

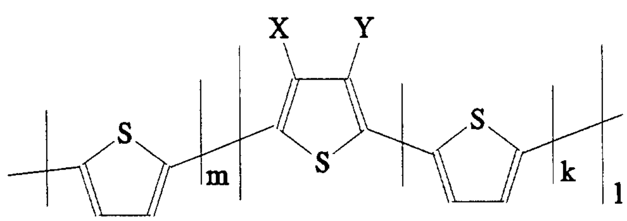

(VIII)

in denen X und Y wie oben definiert sind und n, m und k unabhängig voneinander eine ganze Zahl von 1 bis 10, vorzugsweise eine ganze Zahl von 1 bis 6, bedeuten, und 1 eine ganze Zahl von 1 bis 3.000, vorzugsweise 1 bis 1.000, insbesondere 1 bis 100, bedeutet. Dabei ist die alternierende Abfolge einer substituierten Thiopheneinheit und einer unsubstituierten Thiopheneinheit bevorzugt.

Besonders bevorzugte Polythiophene stellen solche dar, in denen die Struktureinheit (II) ausgewählt wird aus der Gruppe bestehend aus den Resten der folgenden allgemeinen Formeln

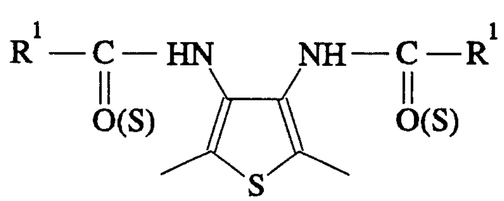

(IIa)

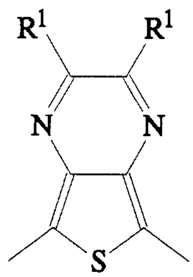

(IIb)

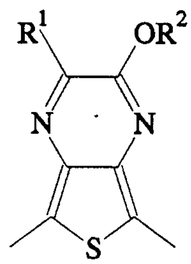

(IIc)

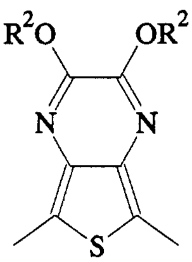

(IId)

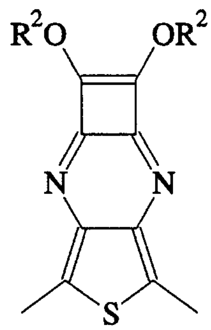

(IIe)

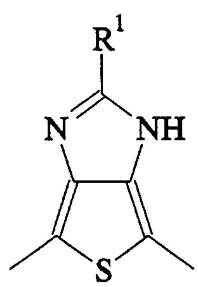

(IIf)

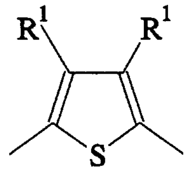

(IIg)

wobei $R^2 = CH_2R^1$ oder $R^2 = CHR^1_2$, $R^1$ = H oder wie in Anspruch 1 definiert ist, wobei Reste der allgemeinen Formel (IIg) mit $R^1$ in der Bedeutung "Wasserstoff" ausgeschlossen sind.

Unter den oben genannten Struktureinheiten (II) sind die folgenden, individuell aufgelisteten Struktureinheiten besonders bevorzugt. Dabei ist es selbstverständlich, daß sich diese von den entsprechenden, in Nachbarschaft zum Thiophen-Schwefelatom di-substituierten Verbindungen ableiten:

3,4-Di(decyl)thiophen-, 3,4-Di(undecyl)thiophen-, 3,4-Di(dodecyl)thiophen-, 3,4-Di(tridecyl)thiophen-, 3,4-Di(tetradecyl)thiophen-, 3,4-Di(pentadecyl)thiophen-, 3,4-Di(hexadecyl)thiophen-, 3,4-Di(heptadecyl)thiophen- und 3,4-Di(octadecyl)thiophen-Struktureinheiten;

3,4-Di(decyloxy)thiophen-, 3,4-Di(undecyloxy)thiophen-, 3,4-Di(dodecyloxy)thiophen-, 3,4-Di(tridecyloxy)thiophen-, 3-4-Di(tetradecyloxy)thiophen-, 3,4-Di(pentadecyloxy)thiophen-, 3,4-Di(hexadecyloxy)thiophen-, 3,4-Di (heptadecyloxy)thiophen- und 3,4-Di(octadecyloxy)thiophen-Struktureinheiten; weiterhin bevorzugt sind Struktureinheiten, in denen die oben definierten Etherreste durch die entsprechenden Thioetherreste ersetzt sind;

3,4-Di(decyloxyethyl)thiophen-, 3,4-Di(undecyloxyethyl)thiophen-, 3,4-Di(dodecyloxyethyl)thiophen-, 3,4-Di(tridecyloxyethyl)thiophen-, 3,4-Di(tetradecyloxyethyl)thiophen-, 3,4-Di(pentadecyloxyethyl)thiophen-, 3,4-Di(hexadecyloxyethyl)thiophen-, 3,4-Di(heptadecyloxyethyl)thiophen- und 3,4-Di(octadecyloxyethyl)thiophen-Struktureinheiten;

wobei ferner Struktureinheiten bevorzugt sind, in denen sich das (die) Sauerstoffatom(e) innerhalb der oben näher definierten Alkyloxyalkyl-Gruppen in z.B. der 3-, 3,6-, 3,6,9-, 3,6,9,12-Position(en), usw., je nach Gesamtlänge des Substituenten, befindet(en), wie z.B. 3,4-Di((2-decyloxy)ethyl)thiophen; 3,4-Di((3-decyloxy)propyl)thiophen; 3,4-Di((4-decyloxy)butyl)thiophen; usw.; 3,4-Di(2-(2-(decyloxy)ethoxy)ethyl)thiophen; 3,4-Di(2-(2-(undecyloxy) ethoxy)-ethyl)thiophen; 3,4-Di(2-(2-(dodecyloxy)ethoxy)ethyl)thiophen; usw., wobei die Gesamtzahl der C-Atome 22 nicht übersteigt; weiterhin bevorzugt sind Struktureinheiten, in denen das Sauerstoffatom der oben definierten Alkyloxyalkyl-Substituenten durch Schwefel ersetzt wird;

3,4-Di(cyclopentyl)thiophen-, 3,4-Di(cyclopentenyl)thiophen-, 3,4-Di(cyclohexyl)thiophen-, 3,4-Di(cyclohexenyl) thiophen-, 3,4-Di(cyclohexadienyl)thiophen-, 3,4-Di(phenyl)thiophen- und 3,4-Di(benzyl)thiophen-Struktureinheiten, wobei die oben angegebenen Substituenten wiederum durch eine oder mehrere der für $R^1$ definierten Gruppen substituiert sein können;

3,4-Di(decanoyl)thiophen-, 3,4-Di(undecanoyl)thiophen-, 3,4-Di(dodecanoyl)thiophen-, 3,4-Di(tridecanoyl)thiophen-, 3,4-Di(tetradecanoyl)thiophen-, 3,4-Di(pentadecanoyl)thiophen-, 3,4-Di(hexadecanoyl)thiophen-, 3,4-Di (heptadecanoyl)thiophen- und 3,4-Di(octadecanoyl)thiophen-Struktureinheiten; sowie die entsprechenden Alkanoyloxy-Struktureinheiten, wie z.B. 3,4-Di(decanoyloxy)thiophen, 3,4-Di(undecanoyloxy)thiophen, usw; weiterhin bevorzugt sind auch hier Substituenten, in denen die sich darin befindliche Carbonylgruppe durch eine Thiocarbonylgruppe ersetzt wird;

3,4-Di(decanoylamino)thiophen-, 3,4-Di(undecanoylamino)thiophen-, 3,4-Di(dodecanoylamino)thiophen-, 3,4-Di (tridecanoylamino)thiophen-, 3,4-Di(tetradecanoylamino)thiophen-, 3,4-Di(pentadecanoylamino)thiophen-, 3,4-Di (hexadecanoylamino)thiophen-, 3,4-Di(heptadecanoylamino)thiophen- und 3,4-Di(octadecanoylamino)thiophen-Struktureinheiten, wobei auch hier das Sauerstoffatom durch Schwefel ersetzt werden kann;

2,3-Dipentylthieno[3,4-b]pyrazin, 2,3-Didecylthieno[3,4-b]pyrazin-, 2,3-Diundecylthieno[3,4-b]pyrazin-, 2,3-Didodecylthieno[3,4-b]pyrazin-, 2,3-Ditridecylthieno[3,4-b]pyrazin-, 2,3-Ditetradecylthieno[3,4-b]pyrazin-, 2,3-Dipentadecylthieno[3,4-b]pyrazin-, 2,3-Dihexadecylthieno[3,4-b]pyrazin-, 2,3-Diheptadecylthieno[3,4-b]pyrazin- und 2,3-Dioctadecylthieno[3,4-b]pyrazin-Struktureinheiten;

2-Methyl-3-decyloxythieno[3,4-b]pyrazin-, 2-Methyl-3-undecyloxythieno[3,4-b]pyrazin-, 2-Methyl-3-dodecyloxythieno[3,4-b]pyrazin-, 2-Methyl-3-tridecyloxythieno[3,4-b]pyrazin-, 2-Methyl-3-tetradecyloxythieno[3,4-b]pyrazin-, 2-Methyl-3-pentadecyloxythieno[3,4-b]pyrazin-, 2-Methyl-3-hexadecyloxythieno[3,4-b]pyrazin-, 2-Methyl-3-octadecyloxythieno[3,4-b]pyrazin-, 2-Methyl-3-eicosyloxythieno[3,4-b]pyrazin-, 2-Methyl-3-docosyloxythieno [3,4-b]pyrazin-, 2-Ethyl-3-decyloxythieno[3,4-b]pyrazin-, 2-Ethyl-3-undecyloxythieno[3,4-b]pyrazin-, 2-Ethyl-3-dodecyloxythieno[3,4-b]pyrazin-, 2-Ethyl-3-tridecyloxythieno-[3,4-b]pyrazin-, 2-Ethyl-3-tetradecyloxythieno[3,4-b] pyrazin-, 2-Ethyl-3-pentadecyloxythieno[3,4-b]pyrazin-, 2-Ethyl-3-hexadecyloxythieno[3,4-b]pyrazin-, 2-Ethyl-3-octadecyloxythieno[3,4-b]pyrazin-, 2-Ethyl-3-eicosyloxythieno[3,4-b]-pyrazin-, 2-Ethyl-3-docosyloxythieno[3,4-b]pyrazin-Struktureinheiten, 2-Phenyl-3-decyloxythieno[3,4-b]pyrazin-, 2-Phenyl-3-undecyloxythieno[3,4-b]pyrazin-, 2-Phenyl-3-dodecyloxythieno[3,4-b]pyrazin-, 2-Phenyl-3-tridecyloxythieno[3,4-b]pyrazin-, 2-Phenyl-3-tetradecyloxythieno[3,4-b]pyrazin-, 2-Phenyl-3-pentadecyloxythieno[3,4-b]pyrazin-, 2-Phenyl-3-hexadecyloxythieno[3,4-b]pyrazin-, 2-Phenyl-3-heptadecyloxythieno[3,4-b]pyrazin-,2-Phenyl-3-octadecyloxythieno[3,4-b]pyrazin-, 2-Phenyl-3-eicosyloxythieno[3,4-b]pyrazin- und 2-Phenyl-3-docosyloxythieno[3,4-b]pyrazin-Struktureinheiten, wobei auch hier das Sauerstoffatom im Substituenten durch Schwefel ersetzt werden kann;
2,3-Di(decyloxy)thieno[3,4-b]pyrazin-, 2,3-Di(undecyloxy)thieno[3,4-b]pyrazin-, 2,3-Di(dodecyloxy)thieno[3,4-b]pyrazin-, 2,3-Di(tridecyloxy)thieno[3,4-b]pyrazin-, 2,3-Di(tetradecyloxy)thieno[3,4-b]pyrazin-, 2,3-Di(pentadecyloxy)thieno[3,4-b]pyrazin-, 2,3-Di(hexadecyloxy)thieno[3,4-b]pyrazin-, 2,3-Di(heptadecyloxy)thieno[3,4-b]pyrazin-, 2,3-Di(octadecyloxy)thieno[3,4-b]pyrazin-, 2,3-Di(eicosyloxy)thieno[3,4-b]pyrazin- und 2,3-Di(docosyloxy)thieno[3,4-b]pyrazin-Struktureinheiten; weiterhin bevorzugt sind Struktureinheiten, in denen die oben definierten Etherreste durch die entsprechenden Thioetherreste ersetzt sind;
2,3-Di(decyloxyethyl)thieno[3,4-b]pyrazin-, 2,3-Di(undecyloxyethyl)thieno[3,4-b]pyrazin-, 2,3-Di(dodecyloxyethyl)thieno[3,4-b]pyrazin-, 2,3-Di(tridecyloxyethyl)thieno[3,4-b]pyrazin-, 2,3-Di(tetradecyloxyethyl)thieno[3,4-b]pyrazin-, 2,3-Di(pentadecyloxyethyl)thieno[3,4-b]pyrazin-, 2,3-Di(hexadecyloxyethyl)thieno-[3,4-b]pyrazin-, 2,3-Di(heptadecyloxyethyl)thieno[3,4-b]pyrazin- und 2,3-Di-(octadecyloxyethyl)thieno[3,4-b]pyrazin-Struktureinheiten; wobei ferner Struktureinheiten bevorzugt sind, in denen sich das (die) Sauerstoffatom(e) innerhalb der oben näher definierten Alkyloxyalkyl-Gruppen z.B. in der 3-, 3,6-, 3,6,9-, 3,6,9,12-Position, usw., je nach Gesamtlänge des Substituenten, befindet; wie z.B. 2,3-Di(ethyl-2-oxydecyl)thieno[3,4-b]pyrazin; 2,3-Di(propyl-3-oxydecyl)thieno[3,4-b]pyrazin; 2,3-Di(butyl-4-oxydecyl)thieno[3,4-b]pyrazin; usw.; 2,3-Di(2-(2-(decyloxy)ethoxy)ethyl)thieno[3,4-b]pyrazin; 2,3-Di(2-(2-(undecyloxy)ethoxy)ethyl)thieno[3,4-b]pyrazin; 2,3-Di(2-(2-(dodecyloxy)ethoxy)ethyl)thieno[3,4-b]pyrazin; usw., wobei jeweils die Gesamtzahl der C-Atome 22 nicht übersteigt; weiterhin bevorzugt sind Struktureinheiten, in denen das Sauerstoffatom der oben definierten Alkyloxyalkyl-Substituenten das Sauerstoffatom durch Schwefel ersetzt wird;
2,3-Di(cyclopentyl)thieno[3,4-b]pyrazin-, 2,3-Di(cyclopentenyl)thieno[3,4-b] pyrazin-, 2,3-Di(cyclohexyl)thieno[3,4-b]pyrazin-, 2,3-Di(cyclohexenyl)thieno[3,4-b]pyrazin-, 2,3-Di(cyclohexadienyl)thieno[3,4-b]pyrazin-, 2,3-Di(phenyl)thieno[3,4-b]pyrazin- und 2,3-Di(benzyl)thieno[3,4-b]pyrazin-Struktureinheiten, wobei die oben angegebenen Substituenten wiederum durch eine oder mehrere der für $R^1$ definierten Gruppen substituiert sein können;
5,6-Di(decyloxy)cyclobuta[b]thieno[3,4-e]pyrazin-, 5,6-Di(undecyloxy)cyclobuta[b]thieno[3,4-e]pyrazin-, 5,6-Di(dodecyloxy)cyclobuta[b]thieno[3,4-e]pyrazin-, 5,6-Di(tridecyloxy)cyclobuta[b]thieno[3,4-e]pyrazin-,5,6-Di(tetradecyloxy)cyclobuta[b]thieno[3,4-e]pyrazin-, 5,6-Di(pentadecyloxy)cyclobuta[b]thieno[3,4-e]pyrazin-, 5,6-Di(hexadecyloxy)cyclobuta[b]thieno[3,4-e]pyrazin-, 5,6-Di(heptadecyloxy)cyclobuta[b]thieno[3,4-e]pyrazin- und 5,6-Di(octadecyloxy)cyclobuta[b]thieno[3,4-e]pyrazin-Struktureinheiten; weiterhin bevorzugt sind Struktureinheiten, in denen die oben definierten Etherreste durch die entsprechenden Thioetherreste ersetzt sind;
5,6-Di(cyclopentyloxy)cyclobuta[b]thieno[3,4-e]pyrazin-, 5,6-Di(cyclopentenyloxy)cyclobuta[b]thieno[3,4-e]pyrazin-,5,6-Di(cyclohexyloxy)cyclobuta[b]thieno[3,4-e]pyrazin-, 5,6-Di(cyclohexenyloxy)cyclobuta[b]thieno[3,4-e]pyrazin-, 5,6-Di(cyclohexadienyloxy)cyclobuta[b]thieno[3,4-e]pyrazin-, 5,6-Di(phenyl)cyclobuta[b]thieno[3,4-e]pyrazin- und 5,6-Di(benzyl)cyclobuta[b]thieno[3,4-e]pyrazin-Struktureinheiten, wobei die oben angegebenen Substituenten wiederum durch eine oder mehrere der für $R^1$ definierten Gruppen substituiert sein können;
2-Decyl-1H-thieno[3,4-d]imidazol-, 2-Undecyl-1H-thieno[3,4-d]imidazol-, 2-Dodecyl-1H-thieno[3,4-d]imidazol-, 2-Tridecyl-1H-thieno[3,4-d]imidazol-, 2-Tetradecyl-1H-thieno[3,4-d]imidazol-, 2-Pentadecyl-1H-thieno[3,4-d]imidazol-, 2-Hexadecyl-1H-thieno[3,4-d]imidazol-, 2-Heptadecyl-1H-thieno[3,4-d]imidazolund 2-Octadecyl-1H-thieno[3,4-d]imidazol-Struktureinheiten;
2-Cyclopentyl-1H-thieno[3,4-d]imidazol-, 2-Cyclopentenyl-1H-thieno[3,4-d]imidazol-, 2-Cyclohexyl-1H-thieno[3,4-d]imidazol-, 2-Cyclohexenyl-1H-thieno[3,4-d] imidazol-, 2-Cyclohexadienyl-1H-thieno[3,4-d]imidazol-, 2-Phenyl-1H-thieno[3,4-d]imidazol- und 2-Benzyl-1H-thieno[3,4-d]imidazol-Struktureinheiten; 2-Butylthio-1H-thieno[3,4-d]imidazol-, 2-Pentylthio-1H-thieno[3,4-d]imidazol-, 2-Hexylthio-1H-thieno[3,4-d]imidazol-, 2-Heptylthio-1H-thieno[3,4-d]imidazol-, 2-Octylthio-1H-thieno[3,4-d]imidazol-, 2-Nonylthio-1H-thieno[3,4-d]-imidazol-, 2-Decylthio-1H-thieno[3,4-d]imidazol-2-Undecylthio-1H-thieno[3,4-d]imidazol-, 2-Dodecylthio-1H-thieno[3,4-d] imidazol-, 2-Tridecylthio-1H-thieno[3,4-d]imidazol-, 2-Tetradecylthio-1H-thieno[3,4-d]imidazol-, 2-Pentadecylthio-1H-thieno[3,4-d]imidazol-, 2-Hexadecylthio-1H-thieno[3,4-d]- imidazol-, 2-Heptadecylthio-1H-thieno[3,4-d]imidazol-, 2-Octodecylthio-1H-thieno[3,4-d]imidazol-Struktureinheiten, wobei die oben angegebenen Substituenten wiederum durch eine oder mehrere der für $R^1$ definierten Gruppen substituiert sein können.

Die Anteile der oben definierten Struktureinheiten (I) und (II) in den erfindungsgemäßen Polythiophenen betragen ungefähr 1 bis ungefähr 99 Mol-% (I) und ungefähr 99 bis ungefähr 1 Mol-% (II), vorzugsweise ungefähr 30 bis ungefähr 70 Mol-% (I) und ungefähr 70 bis ungefähr 30 Mol-% (II), und insbesondere ungefähr 50 Mol-% (I) und ungefähr 50 Mol-% (II), wobei sich die Anteile dieser beiden Struktureinheiten jeweils zu 100 Mol-% addieren. Vorzugsweise ist die Abfolge der beiden Struktureinheiten (I) und (II) alternierend.

Das Gewichtsmittel des Molekulargewichts ($M_w$) der erfindungsgemäß hergestellten Polythiophene, gemessen durch Gelpermeationschromatographie unter Verwendung von Polystyrol als Standard beträgt im allgemeinen ungefähr 1.000 bis ungefähr 500.000, bevorzugt ungefähr 10.000 bis ungefähr 250.000, und insbesondere ungefähr 30.000 bis ungefähr 80.000. Die Uneinheitlichkeit der Molekulargewichtsverteilung, d.h. der Quotient aus dem Gewichtsmittel des Molekulargewichts und dem Zahlenmittel des Molekulargewichts ($M_w/M_n$), beträgt ungefähr 2 bis ungefähr 4, bevorzugt ungefähr 2 bis ungefähr 3, und insbesondere ungefähr 2 bis ungefähr 2,5.

Die Verfahren zur Herstellung der erfindungsgemäßen Polythiophene sind die Umsetzung nach Stille, die bereits in der Einleitung erwähnt wurde, sowie die Umsetzung nach Suzuki (s. A. Suzuki et al. "Stereoselective synthesis of arylated (E)-alkanes by the reaction of alk-1-enylboranes with aryl halides in the presence of palladium catalyst", J. C. S. Chem. Comm., 1979, S. 866-867) dar, die im folgenden näher erläutert werden sollen.

Bei der Suzuki-Umsetzung werden 2,5-Dihalogen- oder 2,5-Triflat-substituierte Thiophene, die der erfindungsgemäßen Struktureinheit (II) entsprechen, mit Thiophendiborsäure oder Thiophendiborsäureestern in Anwesenheit einer Base, vorzugsweise Natriumethoxid, und eines Palladium-Komplexes der Struktur $PdL_4$ (L = Ligand), vorzugsweise $Pd(PPh_3)_4$, umgesetzt.

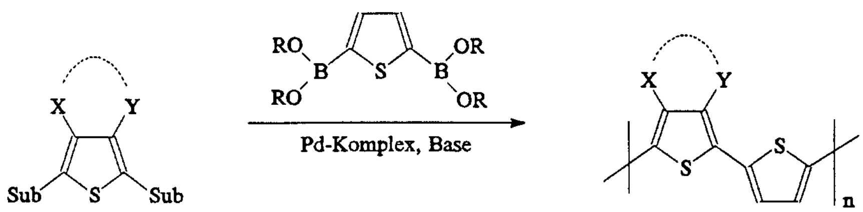


Sub = Halogen oder Triflat
X,Y = wie oben definiert
R = H oder Alkyl

Als bevorzugte Borane werden bei dieser Umsetzung Thiophen-2,5-diborsäure und "ihre" Ester eingesetzt. Bezüglich weiterer Details dieser Umsetzung wird auf die oben referierte Literaturstelle verwiesen.

Selbstverständlich können im Rahmen der Suzuki-Umsetzung die Diborsäure(ester)derivate der den obigen Struktureinheiten (II) entsprechenden Thiophenderivate mit 2,5-Dihalogen- oder 2,5-Triflat-substituiertem Thiophen, das der Struktureinheit (I) entspricht, umgesetzt werden.

Das insbesondere bevorzugte Verfahren zur Herstellung der erfindungsgemäßen Polythiophene stellt jedoch die bereits eingangs erwähnte Stille-Umsetzung dar. In dieser Umsetzung werden 2,5-Dihalogenthiophen bzw. 2,5-Ditriflatthiophen und an den dem Schwefel benachbarten Kohlenstoffatomen Bis(trialkylzinn)-substituierte Thiophenderivate, die der oben definierten Struktureinheit (II) entsprechen, oder 2,5-Bis(trialkylzinn)tiophen und an den dem Schwefel benachbarten Kohlenstoffatomen Bis(halogen)- oder Bis(triflat)-substituierte Thiophenderivate, die der oben definierten Struktureinheit (II) entsprechen, nach dem folgenden Schema miteinander in geeigneten Lösungsmitteln in Anwesenheit von geeigneten Pd(0)- oder Pd(II)-Komplexen oder Salzen als Katalysator umgesetzt.

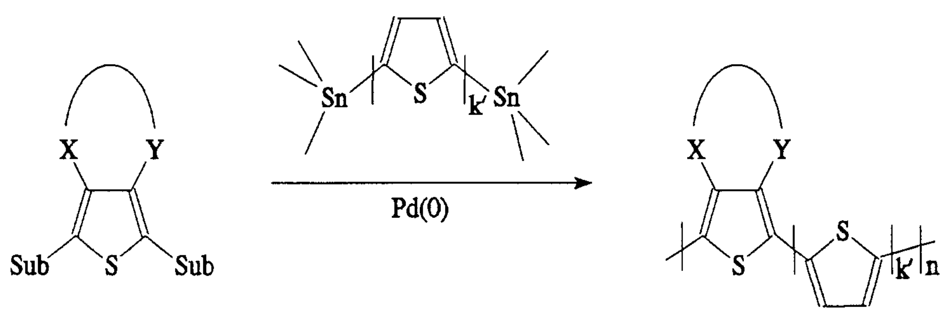


Sub = Halogen oder Triflat k' = 1,2,3,...10

Unter den in obigem Schema erwähnten Substituenten "Sub" werden Halogen-substituierte Derivate bevorzugt eingesetzt. Sofern Bis(triflat)-, d.h. ($CF_3SO_3$)-substituierte Edukte eingesetzt werden, kann z.B. LiCl zur Verbesserung der Reaktivität zugesetzt werden.

Aufgrund der milden Bedingungen ihrer Durchführung toleriert diese Reaktion alle Arten von Substituenten, wie z.B. Amin-, Acyl-, Ester-, Ether- und Nitro-Gruppen.

Als Katalysatoren werden Pd(II)- oder Pd(0)-Komplexe eingesetzt. Als bevorzugte Katalysatoren sind insbesondere die folgenden zu nennen: Tris(dibenzylidenaceton)dipalladium ($Pd_2dba_3$), $Pd(Ph_3P)_2Cl_2$, wobei "Ph" für $C_6H_5$ steht, und $Pd(Ph_3P)_4$. Bei der Verwendung von Tris(dibenzylidenaceton)dipalladium können verschiedene Liganden zugesetzt werden, wobei der katalytisch wirksame Katalysator $PdL_4$ in situ durch Ligandenaustausch zwischen dem schwach koordinierten $Pd_2dba_3$ und dem oder den Liganden gebildet wird.

Als Liganden sind dabei $PPh_3$, $AsPh_3$, $[2\text{-}(CH_3)C_6H_4]_3P$, $P(OPh)_3$ und $(2\text{-Furyl})_3P$, wobei "Furyl" für eine 2-Furylgruppe steht, verwendet werden. Die Menge des eingesetzten Katalysators beträgt ungefähr 2 bis ungefähr 10 Mol-%, vorzugsweise ungefähr 2 bis ungefähr 5 Mol-%, bezogen auf die eingesetzte Menge des Bis(trialkylzinn)-substituierten Edukts.

Obwohl im allgemeinen alle Lösungsmittel, die in der Lage sind, die eingesetzten Edukte und Katalysatoren in Lösung zu halten, eingesetzt werden können, stellen DMF, NMP und cyclische Ether, wie z.B. THF und Dioxan, die am meisten geeigneten Lösungsmittel dar. Unter diesen werden DMF und THF bevorzugt eingesetzt.

Die Umsetzung wird im allgemeinen bei Temperaturen zwischen Raumtemperatur und dem Siedepunkt des Lösungsmittels durchgeführt, wobei Temperaturen von ungefähr 50 °C bis ungefähr 100 °C bevorzugt sind. Die Reaktionsdauer variiert je nach verwendeten Edukten und/oder Katalysatoren zwischen 1 Tag und 1 Monat, vorzugsweise 1 Tag bis 1 Woche.

Durch diese relativ milde Umsetzung ist es möglich, Polythiophene mit folgenden vorteilhaften Eigenschaften herzustellen:

- Die erhaltenen Thiophene weisen lediglich geringe oder keine strukturellen Defekte, Dotierung oder Überoxidation auf;
- es ist möglich, eine große Vielzahl funktioneller Gruppen einschließlich Akzeptoren, Donatoren und $\pi$-Systemen mit mehreren Bindungen zwischen Kohlenstoff und einem Heteroatom einzusetzen; und
- es ist möglich, streng alternierende Copolythiophene mit verschieden substituierten Ringen, beispielsweise die Umsetzung von in 3- und 4-Stellung substituierten Thiophenen mit unsubstituierten Thiophenen durchzuführen, was mit den bislang allgemein verwendeten Verfahren zur Polythiophenherstellung nur äußerst schwierig möglich war.

Obwohl auch die Suzuki-Umsetzung die oben aufgeführten Vorteile gegenüber den herkömmlichen Methoden aufweist, wird im Rahmen der vorliegenden Erfindung die Stille-Umsetzung insbesondere bevorzugt, da sie-im Unterschied zu Suzuki-Umsetzung - keine zusätzliche Base benötigt.

Ferner beschreibt die vorliegende Erfindung Verbindungen der allgemeinen Formeln (IXa) bis (IXc)

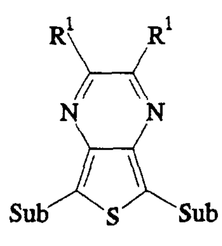

IXa

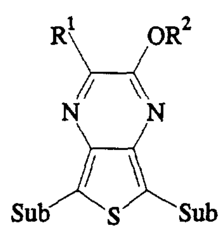

IXb

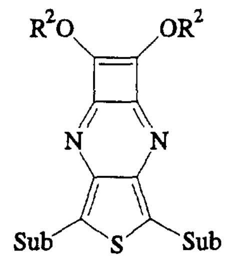

IXc

in denen "Sub" Wasserstoff (H), Brom (Br), Chlor (Cl), Iod (I), Triflat ($CF_3SO_3$) oder Trialkylzinn ist, und $R^1$ wie oben definiert ist, und $R^2$ $CH_2R^1$ oder $CHR^1$ ist, mit der Maßgabe, daß, wenn in Verbindung IXa "Sub" gleich und jeweils Wasserstoff ist, $R^1$ nicht die folgende Bedeutung hat:

- $R^1$ ist gleich und bedeutet jeweils Wasserstoff, Methyl oder $C_6H_{13}$
- $R^1$ ist verschieden voneinander und bedeutet Methyl und Wasserstoff.

Außerdem werden N,N-substituierte 3,4-Diamino-2,5-dihalogen-(oder ditriflat)thiophene der allgemeinen Formel (X)

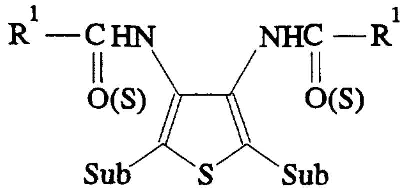

(X)

in der "Sub" und $R^1$ wie oben definiert sind, beschrieben.

Als Substituenten "Sub" sind die oben erwähnten Halogenreste bevorzugt, weiter bevorzugt sind Iod oder Brom. Bezüglich bevorzugter Reste $R^1$ wird auf die weiter oben gegebene Auflistung verwiesen.

Obwohl diese Monomerklasse im allgemeinen nach herkömmlichen Verfahren zur Herstellung solcher Verbindungen dargestellt werden können, wird das bei den Beispielen erläuterte allgemeine Verfahren zur Herstellung dieser Monomere bevorzugt angewandt.

Dünne Filme der erfindungsgemäßen Polythiophene können durch Vergießen von sorgfältig filtrierten oder zentrifugierten Lösungen in Chloroform oder Trichlorethylen auf ein Glassubstrat hergestellt werden. Durch dieses Verfahren können homogene Filme mit einer Dicke von bis zu 300 nm erhalten werden. Die optische Qualität der Filme ist hoch und weist keine nennenswerte Streuung des Lichts auf. Insbesondere die Polymere mit alternierenden Struktureinheiten (I) und (IIb) besitzen ein Maximum im Absorptionsspektrum bei ungefähr 850 bis ungefähr 900 nm und weisen eine hohe Durchsichtigkeit im sichtbaren Bereich auf, wobei sie ein schwächeres Maximum bei ungefähr 420 nm und ein Minimum bei ungefähr 520 nm besitzen. Diese Werte wurden in THF gemessen, worin diese Substanzen grüne Farbe besitzen. Das gleiche gilt für auf diesen Polymeren erhaltene Filme. Polymere mit Amid- oder Sulfamid-Substituenten besitzen die für Polythiophene typische rote Farbe ($\lambda_{max}$ = 410 bis 430 nm), sowohl als Filme als auch in THF-Lösungen.

Die Positionen der Maxima im langwelligen Bereich der Lösungen oder Filme aller Copolymere, die Thieno [3,4-b]pyrazin-Einheiten (IIb bis IIe) aufweisen, wird durch deren relativen Anteil bestimmt und liegt im Bereich von ungefähr 400 bis ungefähr 1.000, insbesondere ungefähr 410 bis ungefähr 900 nm.

Die hierin beschriebenen Polythiophene können entweder undotiert oder dotiert zur antistatischen Ausrüstung von den elektrischen Strom nicht oder nur schlecht leitenden Substanzen, als elektrisch leitfähige Folien, als Halbleiter-Folien, als Zusatzstoff für aktive Elektroden, für LED's, als organische Transistoren und Kondensatoren verwendet werden. Dabei werden diese Copolymere in üblicher Weise verarbeitet und ggf. mit bekannten, für die jeweilige Anwendung erforderlichen Zusatz- und Konfektionierungssubstanzen vermischt bzw. nach bekannten Verfahren verarbeitet.

Darüber hinaus stellt die vorliegende Erfindung noch ein Verfahren zur antistatischen Ausrüstung eines den elektrischen Strom nicht oder nur schlecht leitenden Substrats durch Aufbringen einer Schicht enthaltend ein elektrisch leitfähiges organisches Polymer auf die Oberfläche der Substrate bereit, das dadurch gekennzeichnet ist, daß man auf die Oberfläche des Substrats durch Polymerisation eine Schicht mindestens eines Polythiophens erzeugt, das die oben definierten Struktureinheiten der allgemeinen Formeln
(I) und (II) enthält. Diese oben genannte Schicht kann dabei auch ausschließlich aus dem oben definierten leitfähigen organischen Polymer bestehen.

Ferner stellt die vorliegende Erfindung ein elektrisch leitfähiges Material bereit, das mindestens ein Polythiophen gemäß der vorliegenden Erfindung enthält.

Die vorliegende Erfindung soll nunmehr an einigen ausgewählten Beispielen weiter erläutert werden.

**BEISPIELE**

**Modelluntersuchungen an einigen bevorzugten erfindungsgemäßen Polythiophenen**

Die Vorteile der im Rahmen der vorliegenden Erfindung verwirklichten neuen Strategie zur Bereitstellung elektrisch leitfähiger Polymere auf der Basis von Copolythiophenen soll im folgenden nochmals detailliert anhand von einigen Modellsubstanzen näher erläutert werden.

**2,3-Didecylthieno[3,4-b]pyrazin-thiophen-Oligomer**

Um zu den erfindungsgemäßen Co-Oligomeren oder Copolymeren zu gelangen, wurden die Komponenten 1 und 3 in THF in Gegenwart von $(Ph_3P)_4Pd$ oder $(Ph_3P)_2PdCl_2$, das in einer katalytischen Menge von 2 bis 5 Mol-%, bezogen auf die in untenstehendem Schema dargestellte Komponente 1 verwendet wurde, umgesetzt. Bei dem untenstehend gezeigten Dibromid 1 begann die Umsetzung bereits bei Raumtemperatur.

Um genauere Informationen bezüglich der Strukturen der erhaltenen Polymere zu erhalten, war es nötig, zunächst die Struktur der im Anfangsstadium

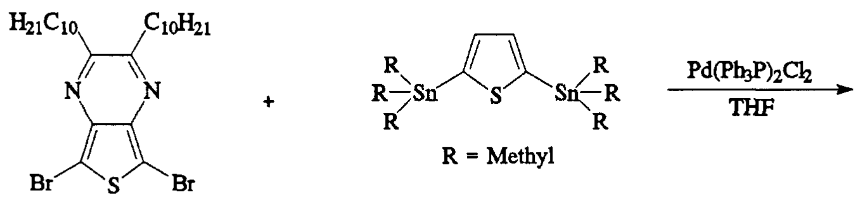


1 3

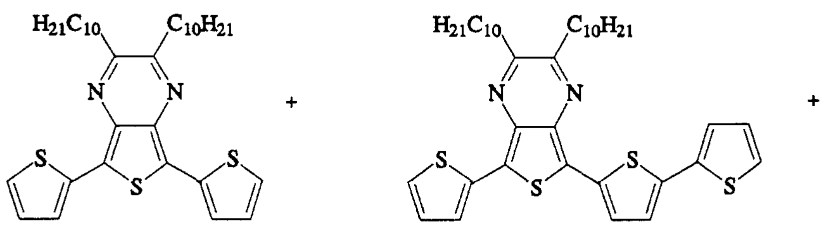

7 8

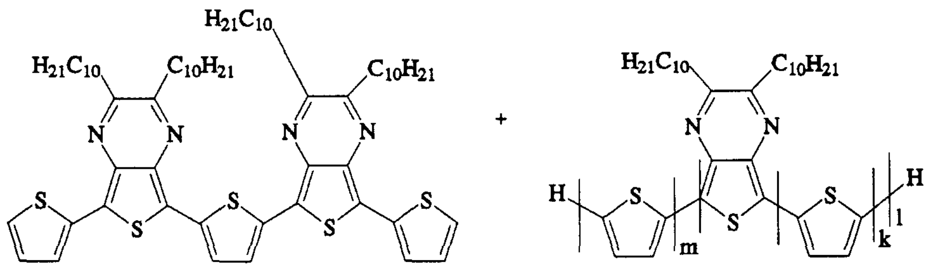

9 4

der Polymerisation gebildeten Oligomeren zu untersuchen. Eine derartige Untersuchung ist im allgemeinen dann möglich, wenn man ein Edukt im Überschuß einsetzt und die Umsetzung bei niedriger Umwandlungsrate unterbricht. Ein Beispiel für eine derartige Umsetzung ist untenstehend gezeigt.

7 = M* 580, $\lambda_{max}$ 503 nm
8 = M* 662, $\lambda_{max}$ 530 nm
9 = M* 1070, $\lambda_{max}$ 617 nm

In diesem Schema sind m und k jeweils eine ganze Zahl von 1 bis 10, 1 ist eine ganze Zahl von 1 bis 3000, R ist Alkyl, $\lambda_{max}$ stellt die Wellenlänge der maximalen Absorption im sichtbaren Bereich dar.

"Kurze" Oligomere 7, 8 und 9 wurden aus dem Reaktionsgemisch abgetrennt, und als reine Verbindungen nach einer Trennung mittels einer Silica-Gel-Säule erhalten. Eine Fraktion "längerer Oligomere", die nach dem Abtrennen erhalten wurde, wurde durch Massenspektroskopie mit "matrix-assisted laser-desorption ionisation" (MALDI) untersucht. Mit dieser Methode ist es möglich, die Masse der intakten Moleküle ohne deren Zerstörung zu erhalten. Dabei ist zu beachten, daß bei der Trennung über die Silica-Gel-Säule die in den Oligomeren noch vorhandenen Zinnreste abgespaltet werden. Die Ergebnisse der massenspektroskopischen Untersuchungen sind in der folgenden Tabelle 1 dargestellt.

**Tabelle 1**

**MALDI-Massenspektrum des Oligomers 4 als Mischfraktion**

| **4** | **1** | **2** | **3** | **4** | **5** | **6** | **7** | **8** |
|---|---|---|---|---|---|---|---|---|
| M* | 1160 | 1242 | 1324 | 1574 | 1656 | 1738 | 2070 | 2154 |
| Σl | 2 | 2 | 2 | 3 | 3 | 3 | 4 | 4 |
| Σ(k+m) | 4 | 5 | 6 | 4 | 5 | 6 | 5 | 6 |
| m/k, mögliche Werte | 1/1,2<br>2/1,1 | 1/2,2<br>2/1,2 | 1/2,3<br>2/2,2<br>3/1,2 | 1/1,1,1 | 1/1,1,2<br>2/1,1,1 | 1/1,2,2 oder 1,1,3<br>2/1,1,2<br>3/1,1,1 | 1/1,1,1,1 | 1/1,1,1,2<br>2/1,1,1,1 |
| Relativintensität | 1,5 | 0,85 | 0,30 | 2,4 | 1,15 | 0,30 | 0,45 | 0,15 |

Bemerkung: M* = relatives, monoisotopes Molekulargewicht

Wie ein Vergleich der erhaltenen Massen in der Reihe 4, 1-2-3; 4-5-6; und 7-8, die jeweils die gleiche Anzahl von Thieno[3,4-b]pyrazin-Einheiten ($\Sigma 1$ = 2,3,4) besitzen, existiert bei dieser Umsetzung, in der eines der Edukte im Überschuß eingesetzt wurde, keine regelmäßige Alternierung zwischen den 3,4-unsubstituierten Thiophenringen und den Thieno[3,4-b]pyrazin-Ringen. In einigen Fällen sind die Pyrazinringe durch mehr als einen Thiophenring voneinander getrennt. So entspricht z.B. das Molekulargewicht 1738 drei Thienopyrazin-Fragmenten ($\Sigma 1$ = 3) und sechs Thiophenringen ($\Sigma(k+m)$ = 6). Da $\Sigma k \geq \Sigma 1$, betragen die für m möglichen Werte 1,2 und 3. Sofern m 1 ist, kann der Satz an k-Werten 1,2,2 oder 1,1,3 betragen, wobei innerhalb des ersten Sets Umlagerungen möglich sind, die dann zu einem Satz 2,1,2 oder 2,2,1 führen, die drei isomeren Oligomeren entsprechen.

Diese Art von "Homokupplung" erfolgt weniger ausgeprägt, sofern gleiche molare Mengen der beiden Edukte (1 und 3) zur Umsetzung gebracht werden. Nach der Reinigung werden bei dieser Ausführungsform Polymere erhalten, deren Elementaranalyse ungefähr ein 1:1-Verhältnis der beiden Monomeren aufweist. Die im Rahmen dieser Reaktion erhaltenen Gewichtsmittel des Molekulargewichts ($M_w$) der ausgehend von 1 und 3 erhaltenen Polymere der allgemeinen Formel 4 liegen zwischen ungefähr 20.000 bis ungefähr 100.000, vorzugsweise bei ungefähr 50.000, jeweils gemessen durch GPC unter Verwendung von Polystyrol als Standard. Die Polydispersität ($M_w/M_n$) liegt bei ungefähr 2,0 bis ungefähr 3,0, vorzugsweise bei ungefähr 2,0 bis 2,5.

Bei den analogen Umsetzungen weiterer Copolythiophene gemäß untenstehendem Schema

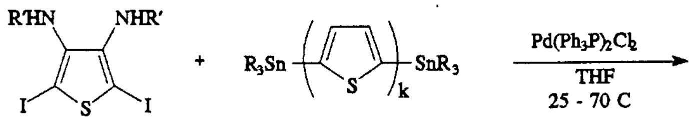


2 3'

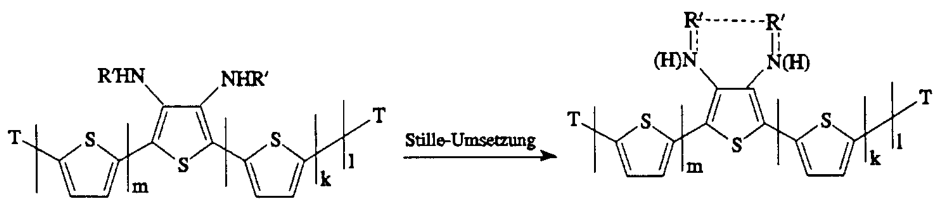


5 6

T = H oder Trialkylzinn
m, k, 1 = wie oben definiert
R = Alkylgruppe, vorzugsweise $CH_3$
R' = Alkanoyl mit 16 bis 22 C-Atomen

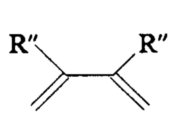
oder
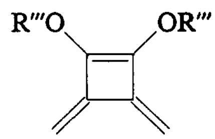

mit R" = Alkyl oder Alkoxyl mit 10 bis 22 C-Atomen
R''' = Alkyl mit 10 bis 22 C-Atomen

werden Copolythiophene mit einem Gewichtsmittel des Molekulargewichts zwischen ungefähr 30.000 bis ungefähr 60.000, vorzugsweise bis ungefähr 50.000, und einer Polydispersität von ungefähr 2,0 bis ungefähr 3,0 erhalten.

Diese Polythiophene der allgemeinen Formeln 4, 5 und 6 mit Alkyl- (oder Alkoxyalkyl-)Substituenten mit 10 bis 22 Kohlenstoffatomen sind in organischen Lösungsmitteln, wie z.B. Chloroform und THF, löslich.

In all diesen Fällen ist selbstverständlich die alternierende Abfolge zwischen substituiertem und unsubstituiertem Thiophen bevorzugt.

Eine sehr interessante Modifikation des Thieno[3,4-b]pyrazin-Fragments schließt die Ausdehnung der Konjugation innerhalb der zu polymerisierenden Pyrazin-Komponente ein. Dieses zusätzliche konjugierte System kann

heterocyclisch oder nicht-heterocyclisch sein. Im letzteren Fall kann es aus einer, zwei oder mehr C=C-Doppelbindungen unter Bildung von 4-, 6-, usw.-gliedrigen Ringen aufgebaut sein. Das 4-gliedrige Ringsystem des Cyclobuta[b] thieno[3,4-e]pyrazins ist von besonderem Interesse, da es einen neuen ungewöhnlichen Polythiophen-Typ mit spezieller Elektronendichteverteilung und damit neuen physikalischen Eigenschaften darstellt.

**Allgemeines Verfahren zur Herstellung der Monomeren**

5,7-Dibromthieno[3,4-b]pyrazine der allgemeinen Formel 11, die interessante Monomere zur Synthese von undotierten oder dotierten Poly- und Oligothiophenen der allgemeinen Formeln 4 und 6, wie oben definiert, darstellen, werden vorzugsweise wie folgt erhalten:

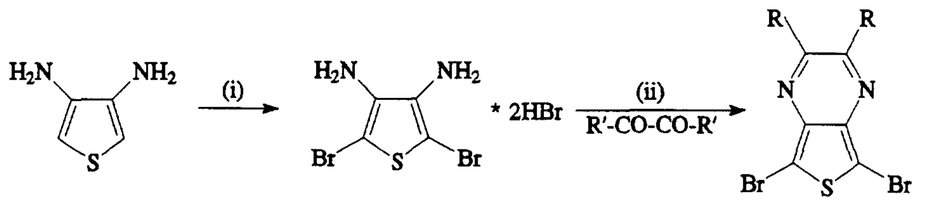


11

**R'** = H, $C_1$- bis $C_{22}$-Alkyl oder $C_1$- bis $C_{22}$-Alkoxyalkyl

i: Umsetzung mit einem Brom-Dioxan-Komplex in THF,
ii: Umsetzung von R'-CO-CO-R' in Gegenwart von Triethylamin in einem Lösungsmittelgemisch aus Ethanol und Methylenchlorid

Die Synthese von 3,4-Diaminothiophen ist in der Literatur beschrieben (s. F. Outurquin et al. "Synthéses du diamino-3,4 thiophène de quelques dérivés de substitution", Bulletin de la Société Quimique de France 1983, S. II-153 bis II-158 und WO 87/05296). Alkyl- oder Alkoxyalkyl-substituierte 1,2-Diketone können in einfacher Weise durch Oxidation von Acetylen erhalten werden (s. D.G. Lee "The preparation of α-diones. Phase-transfer assisted oxidation of alkynes by potassium permanganate", Synthesis, 1978, S. 462-463). Die Umsetzung wird durch das folgende Schema veranschaulicht.

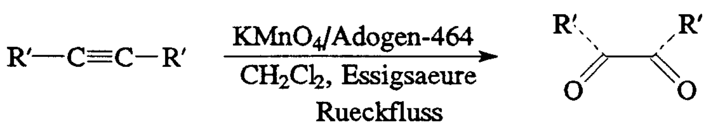


Bevorzugte Ausführungsformen des obigen Monomers 11 stellen die im folgenden beschriebenen Monomere der allgemeinen Formeln 14 und 17 dar.

Die 2,3-Dialkoxy-5,7-dihalothieno[3,4-b]pyrazine der allgemeinen Formel 14 können wie folgt erhalten werden:

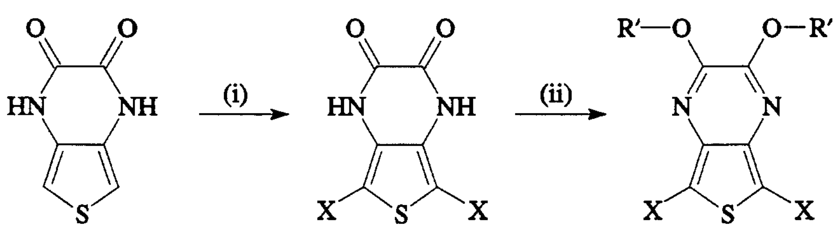


12 13 14

i: $Br_2$-Dioxan(1:1)-Komplex, THF, -10 °C bis Raumtemperatur (X = Br), oder $I_2/KIO_3$/wäßr. $H_2SO_4/ACOH/CCl_4$,

Rückfluß (X = I)
ii: $R'CH_2I$, $Ag_2CO_3$, Toluol, Raumtemperatur, Rückfluß, Ultraschall,

$R^1$ = wie oben definiert,
X = Halogen

2-Alkyl(aryl)-3-alkoxy-5,7-dibromothieno[3,4-b]pyrazine (IIc) können wie folgt synthetisiert werden:

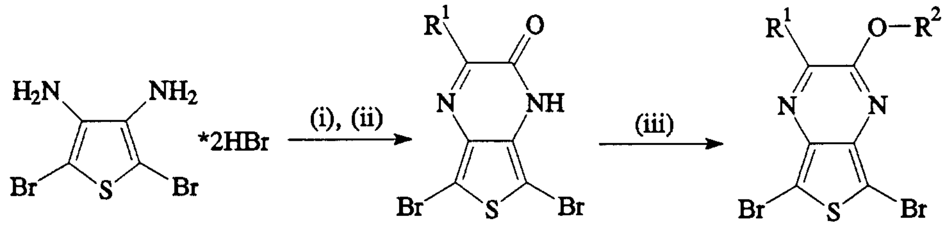


IIc

i: 2 mol $Et_3N$, abs. EtOH, 0 °C;
ii: $R^1COCO_2R^3$ oder $R^1COCOOH$ ($R^1$ = H, oder wie in Anspruch 1 definiert, insbesondere Alkyl oder Aryl, wie dort definiert, $R^3$ = Alkyl), 16 h, Raumtemperatur;
iii: $R^2I$ ($R^2 = CH_2R^1$ oder $CHR^1_2$), $Ag_2CO_3$, Toluol, 20 bis 110 °C, Ultraschall.

Das wichtigste Zwischenprodukt zur Synthese von IIc, Verbindung 10 (3-Alkyl-5,7-dibrom-1,2-dihydro-2-oxothieno[3,4-b]pyrazin) ähnelt der Substanz, die ausgehend von 3,4-Diaminothiophen und Ethylpyruvat von F. Outurquin, P. Lerouge und C. Palmier (Bull. Soc. Chim. Fr., 1086, 2, S. 267-275) erhalten wird. Das dort beschriebene Produkt enthielt jedoch keine Bromatome, und deren weitere chemische Umsetzung ist verschieden von den hier durchgeführten Umsetzungen.

Die 5,6-Dialkoxy-1,3-dibromcyclobuta[b]thieno[3,4-e]pyrazine der allgemeinen Formel 17 können wie folgt erhalten werden:

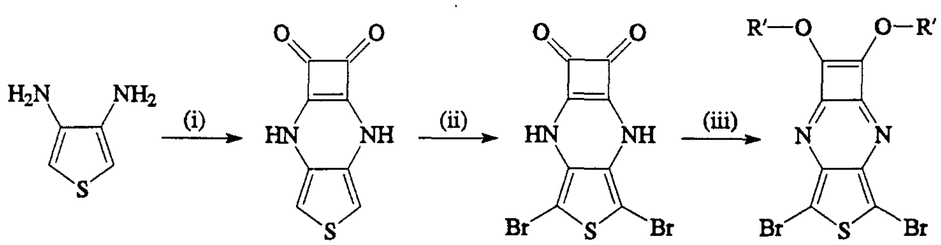


15 16 17

i:

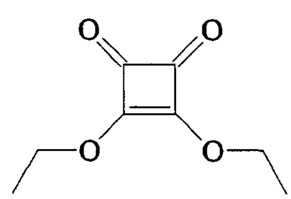

abs. EtOH, Raumtemperatur

ii: $Br_2$-Dioxan(1:1)-Komplex, THF, -10 °C bis Raumtemperatur
iii: $R'CH_2I$, $Ag_2CO_3$, Toluol, Raumtemperatur, Rückfluß, Ultraschall
R' = lineare oder verzweigtkettige $C_1$- bis $C_{22}$-Alkyl

Die 5,7-Dibrom- oder 5,7-Diiod-1,2,3,4-tetrahydro-2,3-dioxothieno[3,4-b]pyrazine 13 können ausgehend von der bekannten Verbindung 12 (s. F. Outurquin et al., Bull. Chem. Soc. France 1983, 5-6, II-153 - II-154) in einer Ausbeute von 60 bis 90% als gelblich-braunes bis dunkelbraunes Pulver erhalten werden. Sie besitzen in praktisch allen Lösungsmitteln eine äußerst geringe Löslichkeit, deren Qualität kann jedoch durch Mikroanalyse über den Br- oder I-Gehalt überprüft werden (s. F. Outurquin et al., a.a.O.)

Die Monomeren 14 und 17 können ausgehend von den Amiden 13 bzw. den Verbindungen 16 durch O,O'-Alkylierung mit den korrespondierenden Iodiden ($RCH_2I$) unter ähnlichen Bedingungen wie in G.C. Hopkins et al., J. Org. Chem., 32, S. 4040 (1967) angegeben hergestellt werden. Bei Verwendung der Silbersalze der Amide überwiegt O,O'-Alkylierung gegenüber einer N,N'-Alkylierung, wenn die Umsetzung in einem aprotischen unpolaren Lösungsmittel, vorzugsweise in einem Kohlenwasserstoff, durchgeführt wird. Besonders bevorzugt wird Toluol verwendet, da es eine Umsetzung bei höheren Temperaturen zuläßt. Es ist notwendig, die Umsetzung unter normalem Rühren durchzuführen und in bestimmten Zeitabständen mit Ultraschall zu behandeln, um die Geschwindigkeit der heterogenen Umsetzung zu beschleunigen. Unter diesen Bedingungen verläuft die Umsetzung innerhalb einiger Tage vollständig, und es wird eine Ausbeute von ungefähr 40% bis ungefähr 70% erhalten. Auf N,N'- und O,O-Alkylierung zurückzuführende Produkte wurden nicht isoliert. Die Ausgangsverbindung 15 wird in einfacher Weise und hoher Ausbeute ausgehend von 3,4-Diaminothiophen und kommerziell erhältlichem 1,2-Diethoxy-2,3-dioxocyclobuten gemäß dem von A. H. Schmidt et al. in Synthesis, S. 869 (1978) beschriebenen Verfahren erhalten. Anschließend werden in der gleichen Weise wie oben beschrieben die Bromierung und O,O-Dialkylierung durchgeführt und das Monomer 17 erhalten.

Die Isolierung und Reinigung der Monomeren 14 und 17 wird durch Chromatographie über eine Silica-Gel-Säule und anschließendem Umkristallisieren durchgeführt. Die erhaltenen Verbindungen sind bei Raumtemperatur an der Luft stabil. Ihre thermische Beständigkeit ist ebenfalls ausreichend für die nachfolgenden Umsetzungen, und es wurde über mehrere Stunden hinweg kein Abbau in Lösung bei Temperaturen bis zu 100 - 120 °C unter Schutzgasatmosphäre beobachtet.

Eine weitere interessante Monomerklasse stellen die N,N-substituierten 3,4-Diamino-2,5-diiodthiophene der allgemeinen Formel 18 dar. Diese können wie folgt erhalten werden:

i: RCOCl oder $RSO_2Cl$ oder RCSCl, Pyridin
ii: $I_2/KIO_3$, $AcOH/H_2SO_4/CCl_4$, Rückfluß

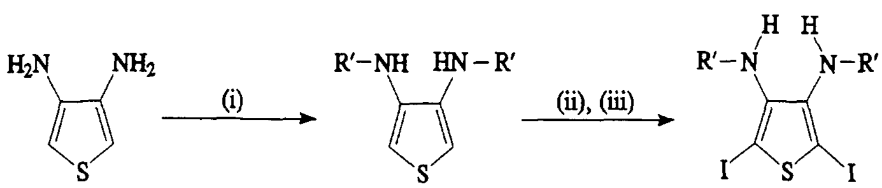


(5)

18

iii: (lediglich sofern R' = RC(O): Lawesson-Reagenz, Toluol, Rückfluß
R' = RC(O), $RSO_2$, RC(S) mit R = lineares oder verzweigtkettiges $C_1$-bis $C_{22}$-Alkyl oder lineares oder verzweigtkettiges $C_1$- bis $C_{22}$-Alkoxyalkyl.

**Ausgangsverbindungen und Monomere**

Docosan-11,12-dion

$$3H_{21}C_{10}\text{-}C\equiv C\text{-}C_{10}H_{21} + 4KMnO_4 + 2H_2O$$

$$\rightarrow 3H_{21}C_{10}\text{-CO-CO-}C1_0H_{21} + 4MnO_2 + 4KOH$$

11-Docosyn wurde gemäß dem allgemeinen, oben gezeigten Verfahren (D.G. Lee et al., Synthesis, 1978, S. 462-463) oxidiert.

11-Docosyn (hergestellt nach dem von T.M. Fyles in J. Org. Chem. 1984, S. 753-761 beschriebenen Verfahren) (15,3 g, 0,05 Mol) und Adogen® 464 (5,7 g, erhältlich von ALDRICH) wurden in einem Gemisch aus 360 ml Dichlormethan und 18 ml Eisessig gelöst. Kaliumpermanganat (21,6 g, 0,136 Mol) wurde fein pulverisiert und zu der am Rückfluß gehaltenen und heftig gerührten Lösung zugegeben. Dieses Gemisch wurde unter Rückfluß vier Stunden lang gerührt. Der Überschuß an Oxidationsmittel und das ausgefallene Mangandioxid wurden durch Zugabe einer Lösung von Natriumnitrit oder -sulfit und Versetzen mit verdünnter Mineralsäure bis zur vollständigen Entfärbung zerstört. Die organische Schicht wurde abgetrennt und die wäßrige Schicht mit Dichlormethan extrahiert. Die vereinigten organischen Schichten wurden nacheinander mit Wasser, 2%iger NaOH, Wasser und Kochsalzlösung gewaschen. Nach dem Trocknen über Magnesiumsulfat wurde das organische Lösungsmittel verdampft und die resultierende wachsartige Substanz aus Methanol umkristallisiert. Es wurden 10,8 g (64% d. Theorie) Docosan-11,12-dion als hellgelber Feststoff mit einem Schmelzpunkt von 68,5-69 °C (Methanol) erhalten.

3,4-Diamino-2,5-dibromthiophen (-dihydrobromid)

3,4-Diaminothiophen (hergestellt nach dem bereits oben beschriebenen Verfahren von F. Outurquin) (1,14 g, 10 mMol) wurde in 30 ml trockenem THF unter Stickstoffatmosphäre gelöst. Anschließend wurden 4,96 g (20 mMol) Brom-1,4-dioxan(1:1)-Komplex in kleinen Anteilen bei -10 °C zu der gerührten Lösung zugegeben. Diese wurde schwarz, und es fiel ein schwarzer Feststoff aus. Man ließ das Reaktionsgemisch sich bis auf Raumtemperatur erwärmen und rührte zwei Stunden lang nach. Anschließend wurde trockener Diethylether zugegeben (100 ml), der Niederschlag abgetrennt, mit trockenem Ether gewaschen und unter Stickstoff getrocknet. Es wurden 4,22 g eines graubraunen Pulvers erhalten. (Ausbeute: 98% bezogen auf 3,4-Diamino-2,5-dibromthiophen-dihydrobromid.)

Diese Substanz besitzt eine begrenzte Stabilität und wurde in den weiteren Umsetzungen ohne weitere Reinigung eingesetzt.

5,7-Dibrom-2,3-didecylthieno[3,4-b]pyrazin (1)

3,4-Diamino-2,5-dibromthiophen-dihydrobromid (5,2 g, 12 mMol) und Docosan-11,12-dion (3,4 g, 10 mMol) wurden unter Stickstoff in 35 ml Dichlormethan und 35 ml absolutem Ethanol miteinander vermischt. Es wurde Triethylamin (2,6 g, 26 mMol) bei 0 °C tropfenweise zu dem gerührten Gemisch zugegeben, das anschließend 1,5 Stunden lang bei 60 °C gehalten wurde. Anschließend wurde Chloroform (200 ml) zugegeben und eine schwarze Suspension durch Celite® (Manville, Filtration and Mineral™) filtriert, um gebildete Feststoffe zu entfernen. Der Filterkuchen wurde mit Chloroform gewaschen und die vereinigten Lösungen wurden kurz gerührt und mit Aktivkohle erwärmt. Filtration durch Celite® und Verdampfen des Lösungsmittels bei vermindertem Druck ergab einen braunen Feststoff, der mit Methanol gewaschen wurde und anschließend aus diesem umkristallisiert wurde. Es wurden 3,3 g (57%) 5,7-Dibrom-2,3-decylthieno[3,4-b]pyrazin als gelbe Nadeln mit einem Schmelzpunkt von 50,9 °C (Zersetzung) erhalten.

5,7-Dibrom-2,3-dipentylthieno[3,4-b]pyrazin (11, $R^1 = C_5H_{11}$)

Diese Verbindung wurde in ähnlicher Weise ausgehend von Dodecan-6,7-dion und 3,4-Diamino-2,5-dibromthiophen-dihydrobromid in 39%iger Ausbeute (d. Theorie) erhalten. Sie besitzt einen Schmelzpunkt von 103,0-103,5 °C (Zersetzung) (aus Methanol).

$^{13}C$-NMR (100 MHz, Chloroform-d) $\delta$, ppm:

13,98 ($CH_3$),
22,49, 27,51, 31,70, 35,23 ($CH_2$),
103,08 (C-Br),
139,31 (C-N),
158,08 (C=N)

3,4-Di(decanoylamino)thiophen

3,4-Diaminothiophen (2,0 g, 17 mMol) wurde in Pyridin gelöst und tropfenweise zu einer gerührten Lösung von 6,5 g (34 mMol) Decanoylchlorid (Siedepunkt 125 °C bei 45 mbar) über eine Spritze zugegeben. Es wurde über Nacht gerührt. Das Reaktionsgemisch wurde in mit konzentrierter Chlorwasserstoffsäure versetztes Eiswasser gegossen und mit Chloroform extrahiert. Die organischen Schichten wurden mit Wasser, 2%iger NaOH und nochmals mit Wasser gewaschen und anschließend über $MgSO_4$, das mit Aktivkohle zum Entfernen der gefärbten Verunreinigungen versetzt war, getrocknet. Nach dem Verdampfen des Lösungsmittels wurde ein Feststoff erhalten, der aus einem Toluol-Hexan-Gemisch umkristallisiert wurde. Der Feststoff besaß einen Schmelzpunkt von 99-100 °C. Die Ausbeute betrug 6,7 g (90% d. Theorie).

$^{13}C$-NMR (100 MHz, Chloroform-d) δ, ppm:

14,11 ($CH_3$),
22,69, 25,75, 29,34, 29,44, 29,53, 31,89, 36,97 ($CH_2$),
113,35 (C-H),
139,31 (C-N),
172,64 (C=O).

3,4-Di(hexadecanoylamino)thiophen

Diese Verbindung wurde ausgehend von 3,4-Diaminothiophen und Palmitoylchlorid (Siedepunkt 141 °C bei 1,4 mbar) in ähnlicher Weise wie oben in einer Ausbeute von 70% d. Theorie hergestellt. Der Schmelzpunkt betrug 107-109 °C (aus Toluol-Hexan).

3,4-Di(decanoylamino)-2,5-diiodothiophen (18, $R^1 = C(O)C_9H_{19}$)

Es wurde das von R.F. Heck in Organic Reactions, 27, S. 345ff. (1982) beschriebene Iodierungsverfahren verwendet. Ein Gemisch aus 1,7 g (4 mMol) 3,4-Di(decanoylamino)thiophen, 0,9 g (3,6 mMol) Iod, 0,5 g (2,4 mMol) Kaliumiodat, 2,0 ml 30%ige Schwefelsäure, 12 ml Tetrachlorkohlenstoff und 7,0 ml Eisessig unter Erwärmen (75 °C) zwei Stunden lang gerührt. Nach dem Abkühlen auf 0 °C wurde ein Niederschlag gesammelt, mit Methanol gewaschen und aus einem Toluol-Ethanol-Gemisch umkristallisiert. Es wurden 2,1 g (78% d. Theorie) 3,4-Di(decanoylamino)-2,5-diiodothiophen mit einem Schmelzpunkt von 213-215 °C (Zersetzung) erhalten.

3,4-Di(hexadecanoylamino)-2,5-diiodothiophen (18, $R' = C(O)C_{15}H_{31}$)

Diese Verbindung wurde in ähnlicher Weise wie oben in einer Ausbeute von 83% d. Theorie hergestellt. Ihr Schmelzpunkt betrug 201-203 °C (Zersetzung) (Toluol-Ethanol).

2,5-Bis(trimethylzinn)thiophen (3, R = Alkyl = $CH_3$)

wurde nach dem von H. Zimmer in J. Org. Chem. 49, S. 5250-5253 (1984) beschriebenen Verfahren hergestellt.

5,5'-Bis(trimethylzinn)-2,2'-bithiophen

wurde nach dem von S. Kotani et al. in J. Organomet. Chem. 429, S. 403-413 (1992) beschriebenen Verfahren hergestellt.

5,5''-Bis(trimethylzinn)-2,2':5',2''-terthiophen (VI, $R^2$ = Alkyl = $CH_3$)

2,2':5',2''-Terthiophen (2,48 g, 10 mMol) wurden in trockenem THF gelöst. Die Lösung wurde durch Einleiten eines leichten Stickstoffstroms deoxygeniert, auf -50 °C abgekühlt, und es wurden 8,0 ml 2,5 M n-BuLi in Hexan (20 mMol) unter Rühren tropfenweise zugegeben. Das Kühlbad wurde entfernt, und das Reaktionsgemisch wurde weitere 4 Stunden lang bei Raumtemperatur gerührt. Anschließend wurde in 15 ml THF gelöstes Trimethylzinnchlorid (4,0 g, 20 mMol) zugegeben und über Nacht gerührt. Das THF wurde verdampft, der Rückstand in Ether gelöst, die Etherlösung mit Wasser und Alkalilauge gewaschen und anschließend über $MgSO_4$ getrocknet. Das Lösungsmittel wurde verdampft, der Feststoff in Hexan aufgenommen und mittels Celite® filtriert. Das Hexan wurde verdampft, und es wurde ein grünes Öl, das zu einem grünen Feststoff auskristallisierte, erhalten. Dieser wurde mit Methanol gewaschen und im Excisator über $CaCl_2$ getrocknet. Die Ausbeute betrug 2,8 g (50% d. Theorie). Der Schmelzpunkt betrug 107-110 °C.

$^{13}C$-NMR (100 MHz, Chloroform-d) δ, ppm:

-8,23 ($CH_3$)
124,16, 124,77, 135,91 (CH),
136,07, 137,55, 142,71 (quaternäres C).
$^1H$-NMR (400 MHz, Chloroform-d) δ, ppm:
0,38 s (18H), 7,06 s (2H), 7,08 d (3,4 Hz, 2H), 7,27 d (3,4 Hz, 2H).

5,7-Dibrom-1,2,3,4-tetrahydro-2,3-dioxothieno[3,4-b]pyrazin (13, X = Br)

Das Edukt 12 wurde gemäß dem von F. Outurquin in Bull. Chem. Soc. France, 1983, II-153 - 159 (Verfahren A) beschriebenen Verfahren erhalten und aus Wasser unter Zugabe von Aktivkohle und des Eindampfens der Mutterlauge auf ein kleines Volumen erhalten. Der Dioxan-Brom-Komplex (1:1, 1,75 g, 7,1 mMol) wurde in kleinen Teilen zu der gerührten Suspension der Verbindung 12 (0,49 g, 2,9 mMol) in 20 ml trockenem THF bei -10 °C unter Stickstoff zugegeben. Nach der Beendigung der Zugabe wurde das Kältebad entfernt, und man ließ das Reaktionsgemisch sich auf Raumtemperatur erwärmen und rührte 6-10 Stunden nach. Es wurde ein brauner Niederschlag abfiltriert, mit Ether gewaschen und getrocknet. Es wurden 0,64 g (67% d. Theorie) eines Rohprodukts der Verbindung 13 erhalten.

1,2,3,4-Tetrahydro-5,7-diiodo-2,3-dioxothieno[3,4-b]pyrazin (13, X = I) wurde ausgehend vom Edukt 12 unter Bedingungen, wie sie von R. F. Heck beschrieben wurden (Organic Reactions, 27, 1982, S. 345; siehe auch die Darstellung von 3,4-Di(decanoylamino)-2,5-diiodothiophen, wie oben beispielshaft beschrieben) erhalten. Die erhaltene hellbeige Substanz, die eine äußerst geringe Löslichkeit in allen organischen Lösungsmitteln aufwies, fiel in ausreichender Reinheit an, so daß sie ohne weitergehende Reinigung in die folgenden Umsetzungen eingesetzt werden konnte.

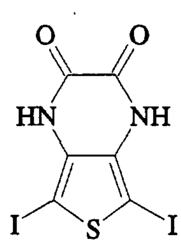

5,7-Dibrom-2,3-di(hexadecyloxy)thieno[3,4-b]pyrazin (14, $R^1 = C_{16}H_{33}$)

Das Edukt 13 (0,59 g, 1,8 mMol), Silbercarbonat (1,10 g, 4,9 mMol), Hexadecyliodid (7,0 g, 20 mMol) wurden in Toluol (70 ml) suspendiert und in einem Ultraschallbad bei Raumtemperatur unter Stickstoff 30 Minuten lang gehalten. Dabei wurde eine Gasentwicklung beobachtet. Anschließend wurde das Reaktionsgemisch bei 100 °C unter Stickstoff 6-8 Stunden lang gerührt, in einem Ultraschallbad (30 min, Raumtemperatur, Stickstoff-Atmosphäre) gehalten. Dieser Ablauf wurde 6- bis 8 mal wiederholt, wobei die Einstrahlung von hellem Tageslicht ausgeschlossen wurde. Nach dem Absetzen des Niederschlags wurde das dunkle Reaktionsgemisch sorgfältig über Celite® unter moderatem Vakuum filtriert, der Filterkuchen wurde mit einem Hexan-Ether-Gemisch gewaschen, bis das durchlaufende Lösungsmittel farblos ablief. Das Filtrat wurde unter reduziertem Druck verdampft, der Rückstand in Hexan gelöst und über eine Silica-Gel-Säule getrennt. Das Hexadecyliodid wurde mittels Hexan eluiert und das gewünschte Produkt 14 wurde mit einem Hexanether-Gemisch (50:1) eluiert. Es wurden 0,56 g (40% d. Theorie) eines hellgelben Feststoffs mit einem Schmelzpunkt von 68 °C (Aceton-Methanol) erhalten.

$^1$H-NMR (400 MHz, $CDCl_3$, δ, ppm): 0,88 t (6H, J 6,5 Hz, $CH_3$), 1,25 m (48H $CH_2$x24), 1,45 m (4H, $CH_2(CH_2CH_2O)$), 1,89 quint (4H, J 6,5 Hz, $CH_2(CH_2O)$), 4,48 t (4H, J 6,5 Hz, $CH_2O$).
$^{13}$C-NMR (100 MHz, $CDCl_3$, δ, ppm): 14,33 ($CH_3$), 22,71, 25,96, 28,37, 29,31, 29,38, 29,61, 29,72 (4- bis 5-fache Intensität), 31,94 ($CH_2$), 67,86 ($CH_2O$), 98,63 (C-Br), 136,24 (=C(N)), 151,08 (C=N).

5,7-Dibromo-1,2-dihyro-3-methyl-2-oxothieno[3,4-b]pyrazin

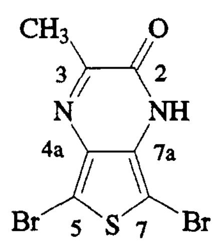

Triethylamin (0,48 g, 4,7 mmol) 10, $R^1$ = Methyl, wurde tropfenweise bei 0 bis 5 °C zu einer gerührten Suspension von 3,4-Diamino-2,5-dibromthienophen-Dihydrobromid (2,06 g, 4,7 mmol) in 30 ml wasserfreiem Ethanol zugegeben. Das Rühren wurde bei gleicher Temperatur 30 min lang fortgeführt. Anschließend wurde bei gleicher Temperatur Ethylpyruvat (0,58 g, 5 mmol) zugetropft. Das Reaktionsgemisch ließ man sich auf Raumtemperatur erwärmen, und es wurde 16 h lang gerührt. Anschließend wurde es in einen Überschuß an Eiswasser gegossen, der Niederschlag wurde gesammelt, mit Wasser gewaschen und bei Raumtemperatur im Vakuum getrocknet, wobei 1,05 g eines dunkelgrauen Pulvers erhalten wurde. Dieses Produkt wurde ohne weitere Reinigung zur O-Alkylierung verwendet. Eine Analyseprobe wurde durch Auflösen der Verbindung in warmem Chloroform, Abfiltrieren eines schwarzen unlöslichen Rests und Ausfällen der Verbindung durch kaltes Ethanol erhalten.

Die Substanz begann sich bei Temperaturen von mehr als 200 °C ohne Schmelzen zu zersetzen.

$^1$H-NMR (400 MHz, DMSO-$d_6$); δ, ppm: 2,32 s (3H, $CH_3$), 11,8 br.s (1H, NH)
$^{13}$C-NMR (100 MHz, DMSO-$d_6$); δ, ppm: 20,7 ($CH_3$), 83,7 (C-7), 106,7 (C-5), 130,6 (C-4a oder C-7a), 134,2 (C-7a oder C-4a), 154,8 (C-2 oder C-3), 159,8 (C-3 oder C-2)

5,7-Dibrom-3-ethyl-1,2-dihydro-2-oxothieno[3,4-b]pyrazin

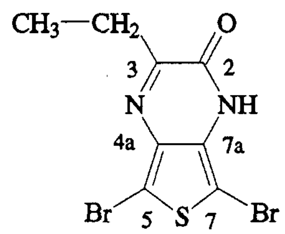

10, $R^1$ = Ethyl

Triethylamin (0,20 g, 2 mmol) wurde bei 0 bis 5 °C zu einer gerührten Suspension von 3,4-Diamino-2,5-dibromthiophen-dihydrobromid (1,15 g, 2,66 mmol) in 20 ml wasserfreiem Ethanol zugegeben. Es wurde bei gleicher Temperatur 30 min lang weitergerührt, anschließend Ethyl-2-oxobutansäure (0,27 g, 2,66 mmol), die in 5 ml wasserfreiem Ethanol gelöst war, zugetropft. Das Reaktionsgemisch ließ man sich auf Raumtemperatur erwärmen, und es wurde 16 h lang weitergerührt. Nach dem Abkühlen des Gemischs in einem Eisbad wurde der Niederschlag gesammelt und mit kaltem Ethanol gewaschen und im Vakuum bei Raumtemperatur getrocknet, wobei 0,53 g eines dunkelgrauen Puders erhalten wurde. Diese Substanz wurde ohne weitere Reinigung zur O-Alkylierung eingesetzt. Eine Analyseprobe wurde durch Auflösen der Substanz in Tetrahydrofuran, Abfiltrieren eines schwaren unlöslichen Rückstands und Ausfällen der Verbindung durch kaltes Ethanol erhalten.

Der Zersetzungsbeginn wurde bei Temperaturen von 200 °C ohne Schmelzen beobachtet.

$^1$H-NMR (400 MHz, DMSO-$d_6$); δ, ppm: 1,20 t (3H, $CH_3$), 2,75 q (2H, $CH_2$)
$^{13}$C-NMR (100 MHz, DMSO-$d_6$); δ, ppm: 10,6 ($CH_3$), 26,5 ($CH_2$), 84,1 (C-7), 107,4 (C-5), 130,8 (C-4a oder C-7a), 134,7 (C-7a oder C-4a), 154,8 (C-2 oder C-3), 159,8 (C-3 oder C-2)

Durch Erwärmen (Umkristallisieren) oder auf Siliciumdioxid wurde eine Umlagerung dieser Substanz beobachtet, wobei die C=N-Bindung wanderte und ein E/Z-Gemisch aus 3-Ethyliden-1,2,3,4-tetrahydro-2-oxothieno[3,4-b] pyrazin erhalten wurde.

**Allgemeines Verfahren zur O-Alkylierung von in 3-Position substituierten 1,2-Dihydro-2-oxothieno[3,4-b]pyrazinen (10)**

**Synthese von 2-Alkoxy-3-alkyl(aryl)thieno[3,4-b]pyrazinen (IIc)**

Edukt 10 wurde in Mengen von einigen mmol verwendet, es ist jedoch auch möglich, Umsetzungen in größerem Maßstab durchzuführen. Zu diesem Edukt wurde Silbercarbonat in äquivalenten molekularen Mengen und Toluol (50 bis 100) zugegeben, und das Reaktionsgemisch wurde 30 min lang bei Raumtemperatur unter Stickstoff mit Ultraschall behandelt.

Anschließend wurde Alkyliodid (10facher Überschuß an primärem oder sekundärem Iodid) auf einmal eingebracht, und es wurde weitere 10 bis 20 h bei 60 bis 70 °C weitergerührt, wobei alle 3 bis 4 h 5 min lang mit Ultraschall behandelt wurde. Anschließend wurde das Gemisch durch Celite filtriert, der Filterkuchen mit Hexan gewaschen, das Filtrat unter Vakuum abgedampft und das Produkt der O-Alkylierung durch Chromatographie über Silica isoliert.

2-Hexadecyloxy-3-methylthieno[3,4-b]pyrazin

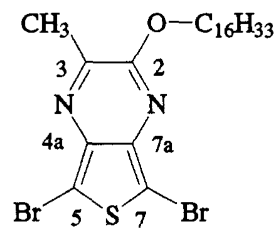

Isolierung: Elution mit Hexan von Silica. Ausbeute: 57% d.Theorie, Smpkt. 58 bis 59,5 °C (Methanol-Ether).
$^1$H-NMR (400 MHz, $CDCl_3$); δ, ppm: 0,85 t (3H, $CH_3$ in Docosyl, 1,25 s (22H, $CH_2)_{11}$), 1,39 m (2H, $\underline{CH_2}$ $(CH_2)_3O$), 1,49 quint (2H, $\underline{CH_2}(CH_2)_2O$), 1,85 quint (2H, $\underline{CH_2}(CH_2O)$), 2,52 s (3H, $CH_3$), 4,45 t (2H, $CH_2O$).
$^{13}$C-NMR (100 MHz, $CDCl_3$); δ, ppm: 14,13 ($CH_3$); 20,84, 22,70, 26,10, 28,51, 29,31, 29,37, 29,56, 29,60, 29,70 (5fache Intensität), 31,93, ($CH_2$-Gruppen), 67,43 ($CH_2O$), 98,25 (C-7), 103,59 (C-5), 137,72 (C-4a oder C-7a), 138,25 (C-7a oder C-4a), 151,37 (C-2 oder C-3), 156,73 (C-3 oder C-2)

2-Docosyloxy-3-methylthieno[3,4-b]pyrazin

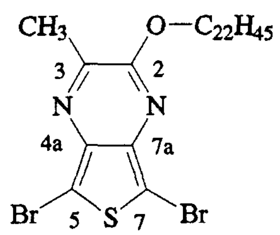

Isolierung: Elution mit Hexan oder Hexan-Ether (50:1) von Silica. Ausbeute: 50% d. Theorie, Smpkt. 65 bis 67 °C (Methanol-Chloroform).

2-Ethyl-3-hexadecyloxythieno[3,4-b]pyrazin

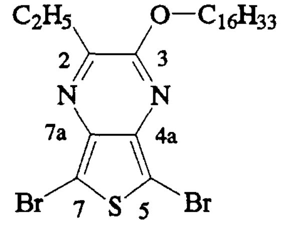

Isolierung: Elution mit Hexan oder Hexan-Ether (50:1) von Silika. Ausbeute: 60% d. Theorie, Smpkt. 42,5 bis 44,5 °C (Methanol-Chloroform).
$^1$H-NMR (400 MHz, $CDCl_3$); δ, ppm: 0,87 t (3H, $CH_3$ in Hexadecyl), 1,22 s (22H, $CH_2)_{11}$), 1,31 t (3H, $\underline{CH_3}$

$(CH_2)$), 1,39 m (2H, $\underline{CH_2}(CH_2)_3O$), 1,49 quint (2H, $\underline{CH_2}(CH_2)_2O$), 1,85 quint (2H, $\underline{CH_2}(CH_2)_2O$), 1,85 quint (2H, $\underline{CH_2}$ $(CH_2O)$)), 2,90 q (2H, $CH_2$ in Ethyl), 4,45 t (2H, $CH_2O$). $^{13}$C-NMR (100 MHz, $CDCl_3$); δ, ppm: 11,13 ($CH_3$), 14,13 ($CH_3$); 22,70, 26,13, 27,18, 28,52, 29,28, 29,37, 29,55, 29,58, 29,70 (5fache Intensität), 31,93, ($CH_2$-Gruppen), 67,26 ($CH_2O$), 98,05 (C-5), 103,86 (C-7), 137,84 (C-4a oder C-7a), 138,11 (C-7a oder C-4a), 155,14 (C-2 oder C-3), 156,46 (C-3 oder C-2).

<u>4,5,6,7-Tetrahydro-5,6-dioxocyclobuta[b]thieno[3,4-e]pyrazin</u> (<u>15</u>)

3,4-Diaminothiophen (0,228 g, 2 mMol) wurde unter Stickstoff in absolutem Ethanol (4 ml) gelöst, und 0,359 g (2,11 mMol) 1,2-Diethoxy-3,4-dioxo-cyclobuten wurde bei Raumtemperatur zu der gerührten Lösung zugegeben. Die Lösung wurde nach wenigen Minuten gelbbraun, und es bildete sich ein Niederschlag. Es wurde über Nacht gerührt, anschließend der Niederschlag entfernt und mit einer kleinen Menge von kaltem Ethanol und Ether gewaschen und anschließend getrocknet. Die Ausbeute betrug 0,31 g (31% d. Theorie). Der Schmelzpunkt lag bei über 300 °C.

$^1$H-NMR (400 MHz, DMSO-$d_6$, δ, ppm): 6,39 s (2H, $H_{ar.}$), 10,73 br. s (2H, NH).

$^{13}$C-NMR (100 MHz, DMSO-$d_6$, δ, ppm): 104,32 (C-$H_{ar.}$), 130,45 (=$C_{ar.}$(N)), 171,38 und 177,61 (C=O und =C (NH) oder umgekehrt).

<u>1,3-Dibrom-4,5,6,7-tetrahydro-5,6-dioxocyclobuta[b]thieno[3,4-e]pyrazin</u> (<u>16</u>)

Verbindung <u>15</u> (0,25 g, 1,3 mMol) wurde in trockenem THF (5 ml) suspendiert. Anschließend wurde der Dioxan-Brom-Komplex (1:1, 0,78 g, 3,0 mMol) in kleinen Teilen bei 0 °C unter Rühren unter Stickstoff zugegeben. Das Kältebad wurde entfernt und das Rühren 6 Stunden lang bei Raumtemperatur fortgesetzt. Das Lösungsmittel wurde verdampft, und der dunkelbraune Niederschlag wurde zunächst mit Methanol und anschließend mit Ether gewaschen und getrocknet. Die Ausbeute betrug 0,31 g (68% d. Theorie).

$^1$H-NMR (400 MHz, DMSO-$d_6$. δ, ppm): 10,95 s (NH).

$^{13}$C-NMR (100 MHz, DMSO-$d_6$, δ, ppm): 88,56 (C-Br), 131,21 (=$C_{ar.}$(N)), 171,53 und 178,08 (C=O und =C (NH) oder umgekehrt).

<u>1,3-Dibrom-5,6-di(dodecyloxy)cyclobuta[b]thieno[3,4-e]pyrazin</u> (<u>17</u>, $R^1 = C_{12}H_{25}$)

Das Edukt <u>16</u> (0,20 g, 0,57 mMol), Silbercarbonat (0,32 g, 1,20 mMol) und Dodecyliodid (3,0 g, 10 mMol) wurden in Toluol bei Raumtemperatur 3 Wochen gerührt. Das Gemisch wurde über Celite filtriert, der Filterkuchen wurde mit Ether gewaschen, und die vereinigten Lösungen wurden verdampft, der Rückstand in Hexan aufgenommen und über eine Silica-Gel-Säule aufgetrennt. Der Überschuß an Dodecyliodid wurde durch Hexan entfernt. Das gewünschte Produkt wurde mit einem Hexan-Ether-Gemisch (19:1 → 9:1) eluiert. Die Ausbeute betrug 0,094 g (24% d. Theorie) eines gelblich-grünen Öls, das bei Raumtemperatur kristallisierte. Der Schmelzpunkt betrug 66-67 °C.

$^1$H-NMR (400 MHz, $CDCl_3$, δ, ppm): 0,87 t (6H, J 6,5 Hz, $\underline{CH_3}$), 1,27 m (40H $CH_2$x20), 1,45 m (4H, $\underline{CH_2}$ $(CH_2CH_2O)$), 1,83 quint (4H, J 6,5 Hz, $\underline{CH_2}(CH_2O)$), 4,42 t (4H, J 6,5 Hz, $\underline{CH_2}O$).

$^{13}$C-NMR (100 MHz, $CDCl_3$, δ, ppm): 14,13 ($CH_3$), 22,70, 25,82, 28,41, 29,26, 29,37, 29,54, 29,59, 29,66 (4-fache Intensität), 31,93 ($CH_2$), 67,12 ($CH_2O$), 108,69 (C-Br), 138,45 (=C(N)), 144,87 (>C(O)<), 164,15 (C=N).

UV (THF, $\lambda_{max}$, nm (ε)): 214 (15.300), 263 (29.100), 323 (7.800), 440 (2.400).

<u>1,3-Dibrom-5,6-di(hexadecyloxy)cyclobuta[b]thieno[3,4-e]pyrazin</u> (<u>17</u>, $R' = C_{16}H_{33}$)

Diese Verbindung wurde ausgehend von <u>16</u> gemäß dem oben beschriebenen Verfahren mit den folgenden Abweichungen durchgeführt. Es wurden 4,3 mMol-16, 4,3 mMol Silbercarbonat, 0,1 Mol Hexadecyliodid eingesetzt. Als Lösungsmittel wurden 350 ml Toluol verwendet. Die Temperatur betrug -40 - 100 °C und die Reaktionszeit betrug 10 Tage (20 Ultraschall-Erwärmungszyklen). Das Endprodukt wurde auf die gleiche Art wie oben beschrieben isoliert. Die Ausbeute betrug 1,6 g (46% d. Theorie) eines orangefarbigen Feststoffs mit einem Schmelzpunkt von 71,5 °C.

$^1$H-MNR (400 MHz, $CDCl_3$, δ, ppm): 0,83 t (6H, J 6,5 Hz, $\underline{CH_3}$), 1,22 m (48H $CH_2$x24), 1,35 m (4H, $\underline{CH_2}$ $(CH_2CH_2O)$), 1,80 quint (4H, J 6,5 Hz, $CH_2(CH_2O)$, 4,41 t (4H, J 6,5 Hz, $\underline{CH_2}O$).

$^{13}$C-NMR (100 Mhz, $CDCl_3$, δ, ppm): 14,13 ($CH_3$), 22,70, 25,82, 28,41, 29,26, 29,38, 29,55, 29,60, 29,71 (4-fache Intensität), 31,94 ($CH_2$)m 67,12 ($CH_2O$), 1008,69 (C-Br), 138,46 (=C(N)), 144,88 (>C(O)<), 164,15 (C=N).

## ALLGEMEINES VERFAHREN ZUR POLYMERISATION

Monomere der allgemeinen Formeln <u>1</u>, <u>2</u> oder deren Gemische wurden in Mengen von 1 bis 2 mMol verwendet. Bis(trialkylzinn)thiophene der allgemeinen Formel <u>3</u> wurden in gleichen molaren Mengen (oder im 2- bis 10-fachen

Überschuß zur Herstellung von Oligomeren) verwendet. Die Edukte wurden in wasserfreiem THF (20-200 ml) gelöst, in einen in einem Ofen getrockneten oder ausgeglühten 2-Hals-Kolben eingebracht und 10 bis 15 Minuten lang ein leichter Stickstoff- oder Argon-Strom durch die Lösung geleitet. Zu der deoxygenierten Lösung wurden 2 bis 5 Mol-% Bis(triphenylphosphin)palladium(II)chlorid oder Tetrakis(triphenylphosphin)palladium(0) zugegeben. Der Kolben wurde mit einem Rückflußkühler versehen und die Umsetzung bei Temperaturen von ungefähr 40 °C bis ungefähr 70 °C 1 bis 7 Tage lang unter einer Stickstoff- oder Argon-Atmosphäre durchgeführt.

Nach Beendigung der Umsetzung wurde das Lösungsmittel verdampft und der Rückstand von den Wänden des Kolbens durch Zugabe von Methanol abgelöst. Der Niederschlag wurde gesammelt, mit Methanol und Hexan gewaschen, wobei die Trialkylzinnhalogenide entfernt wurden. Die weitere Reinigung wurde durch Soxlet-Extraktion mit Methanol, Hexan oder Aceton (für Substanzen mit geringer Löslichkeit) durchgeführt. Zusätzliche Reinigung ist durch Auflösen des Polymers in Chloroform, THF oder anderen Lösungsmitteln (ggf. unter Verwendung eines Ultraschallbads), Zentrifugieren der Lösung von unlöslichen Teilchen (bei 3.000 bis 5.000 U/min und dem Ausfällen der Substanzen mit hohem Molekulargewicht durch Methanol, Hexan oder ein anderes geeignetes Lösungsmittel und anschließendem Zentrifugieren möglich. Falls notwendig, können diese Reinigungsschritte wiederholt werden.

## OLIGO- UND POLYTHIOPHENE

### Beispiel 1

2,3-Didecyl-5,7-di(2-thienyl)thieno[3,4-b]pyrazin (7)

Diese Verbindung wurde in einer Ausbeute von 50% aus dem Reaktionsgemisch isoliert, sofern 2,5-Bis(trimethylzinn)thiophen (3, n = 1, R = $CH_3$) in 10-fachem molaren Überschuß und 1 ($R^1$ = jeweils $C_{10}H_{21}$) miteinander umgesetzt wurden. Die Abtrennung erfolgte über eine Silica-Gel-Säure unter Verwendung von Hexan als Eluationsmittel. Der Schmelzpunkt des erhaltenen Oligomers betrug 54-55 °C.

$^1$H-NMR (400 MHz, Chloroform-d) δ, ppm: 0,89 t (6H, J 7 Hz), 1,2-1,6 m (28H), 1,95 quint (4H, J 7 Hz), 2,88 t (4H, J 7 Hz), 7,08 dd (2H, $H^4$, J(4,5) 5,1 und J(4,3) 3,6 Hz), 7,33 dd (2H, $H^5$ J(5,4) 5,1 und J(5,3) 0,8 Hz), 7,58 dd (2H, $H^3$, J(3,4) 3,6 und J(3,5) 0,8 Hz)

$^{13}$ C-NMR (100 MHz, Chloroform-d) δ, ppm: 14,14 ($CH_3$), 22,71, 26,79, 28,48, 29,40, 29,46, 29,70 (doppelte Int.), 31,94, 34,99 ($CH_2$), 123,57 (Cquat.), 123,84 (CH), 126,05 (CH), 127,03 (CH), 134,98 (Cquat.), 137,61 (Cquat.), 156,32 (C=N).

### Beispiel 2

7-(2,2'-Bithiophen-5-yl)-2,3-didecyl-5-(2-thienyl)thieno[3,4-b]pyrazin (8)

Diese Verbindung wurde aus dem gleichen Reaktionsgemisch wie oben in einer Ausbeute von 15% d. Theorie (Eluationsmittel Hexan) erhalten.

$^1$H-NMR (400 MHz, Chloroform-d) δ, ppm: 0,85 m (6H), 1,2-1,6 (28H), 1,95 m (4H), 2,85 m (4H), 7,04 dd (1H, J. 4,1 und 4,6 Hz), 7,08 dd (1H, 3,8 und 5,0 Hz), 7,13 d (1 H, J. 3,8 Hz), 7,22 breites d (2H, J. 4,35 Hz), 7,33 dd (1H, J. 5,0 und 1,0 Hz), 7,44 d (1H, 3,8 Hz), 7,58 dd (H, J. 3,8 und 1,0 Hz).

$^{13}$C-NMR (100 MHz, Chloroform-d) δ, ppm: 14,14 ($CH_3$), 22,71, 26,69, 26,75, 29,40, 29,46, 29,70 (doppelte Int.), 29,88, 31,94, 34,98 ($CH_2$), 123,32 (Cquat.), 123,40, 123,66, 123,90, 124,32 (breit), 126,14, 127,06, 127,90 (CH), 133,90, 134,97, 137,66, 137,76 (doppelte Int.) (Cquat.), 156,18, 156,46 (C=N).

### Beispiel 3

2,5-Bis[2,3-didecyl-7-(2-thienyl)thieno[3,4-b]pyrazin-5-yl]thiophen (9)

Diese Verbindung wurde als Hauptprodukt einer Umsetzung erhalten, in der ein Moläquivalent 1 ($R^1$ = $C_{10}H_{21}$) und drei Moläquivalente 3 (n = 1, R = $CH_3$) miteinander umgesetzt wurden. Die Ausbeute betrug 13% d. Theorie.

Massenspektrum (MS) (chemische Ionisierung bei Normaldruck), m/z (rel. Int., %): 1077,4 (50, M+), 745,2 (83), 663,3 (100), 581,3 (92), 350,0 (62), 279.1 (62).

$^1$H-NMR (400 MHz, Chloroform-d) δ, ppm: 0,89 m (12H), 1,2-1,6 m (56H), 1,89 m (8H), 2,80 m (8H), 7,05 dd (2H, J 5,0 und 3,8 Hz), 7,30 dd (2H, J 5,0 und 0,9 Hz), 7,53 dd (2H, J. 3,8 und 0,9 Hz), 7,61 s (2H)

$^{13}$C-NMR (100 MHz) Chloroform-d) δ, ppm: 14,16 ($CH_3$), 22,74, 26,56, 26,81, 29,53, 29,83 (hohe Int.), 29.94, 31,98, 34,92, 35,07 ($CH_2$), 123,07 (Cquat.), 123,47 (Cquat.), 123,87 (CH), 124,85 (CH), 125,80 (CH), 126,87 (CH), 135,19 (Cquat.), 137,71 und 137,91 (Cquat.), 155,81 und 156,11 (C=N)

## Tabelle 2

### UV-Spektren der Oligomere 7, 8 und 9 in THF
### $\lambda_{max}$, nm($\epsilon$)

| Nr. | 1 | 2 | 3 | 4 | 5 |
|---|---|---|---|---|---|
| 7 | 212(46400) | 260(sh) | 303(22400) | 340(15100) | 503(7990) |
| 8 | 212(36500) | 277(15000) | 323(13600) | 374(18000) | 530(13300) |
| 9 | 210(23500) | 285(41900) | 310(41900) | 382(32340) | 617(51500) |

**Beispiel 4**

Polymer 4 ($R^1 = C_5H_{11}$)

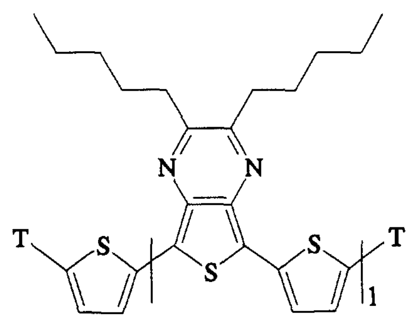

wobei T eine von den eingesetzten Monomeren abgeleitete Endgruppe darstellt.

Dieses Polymer wurde gemäß dem oben beschriebenen allgemeinen Verfahren zur Polymerisation ausgehend von äquimolaren Mengen der Verbindung 1 ($R^1 = C_5H_{11}$) und 3 (n = 1, R = $CH_3$) in Gegenwart von 5 Mol-% Pd $(Ph_3P)_2Cl_2$ erhalten.

Die Umsetzungsdauer betrug 24 h. Die Umsetzungstemperatur betrug 65 °C. Die Reinigung erfolgte durch Soxlet-Extraktion mit Methanol (24 h) und Hexan (24 h). Die Ausbeute betrug 39%. Es wurde ein schwarzer Feststoff erhalten.

| Elementaranalyse $(C_{22}H_{24}N_2S_2)_n$ | |
|---|---|
| Berechnet (%) | C 67,37, H 6,78, N 7,86, S 17,99 |
| Gefunden (%) | C 65,8, H 6,6, N 7,5, S 17,6 |

| UV (THF), c = 15 mg/l, | $\lambda_{max}$ (nm) | $D_{max}$ |
|---|---|---|
| | 420<br>895 | 0,32<br>0,50 |

Farbe der Lösung: hellgrün

**Beispiel 5**

Gemäß dem oben beschriebenen alllgemeinen Verfahren zur Polymerisation wurde ausgehend von äquimolaren Mengen von 5,7-Dibromo-2,3-di(hexadecy-loxy)thieno[3,4-b]pyrazin (1, $R^1 = C_{16}H_{33}$) und 5,5'-Bis(trimethylzinn)-2,2'-bithiophen in Gegenwart von 3 Mol-% $Pd(Ph_3P)_2Cl_2$ nach 24-stündiger Umsetzung bei einer Temperatur von 75 °C und anschließender Soxlet-Extraktion mit Methanol und Aceton ein Polymer mit wiederkehrenden Einheiten der untenstehenden Formel in einer Ausbeute von 53% d. Theorie erhalten.

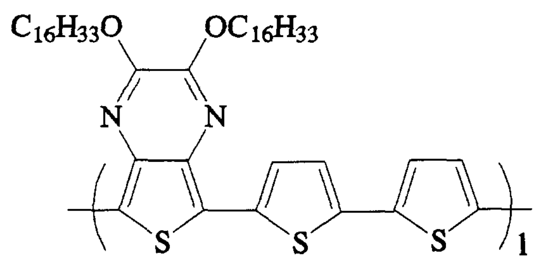

Das Polymer besaß ein Gewichtsmittel des Molekulargewichts ($M_w$) von 29.000 und eine Polydispersität von 2,1, jeweils gemessen mit GPC unter Zuhilfenahme von Polystyrol als Standard. Im UV-Spektrum zeigte dieses Polymer ein $\lambda_{max}$ von 638 nm (THF).

**Beispiel 6**

In analoger Weise wurde ausgehend von 1,3-Dibrom-5,6-di(hexadecyloxy)-cyclobuta[e]thieno[3,4-b]pyrazin und 5,5'-Bis(trimethylzinn)-2,2'-bithiophen in Gegenwart von 4 Mol-% $Pd(Ph_3P)_2Cl_2$ nach 36-stündiger Umsetzung bei einer Temperatur von 80 °C und anschließender Soxlet-Extraktion mit Methanol und Aceton ein Polymer mit den untenstehend wiedergegebenen wiederkehrenden Einheiten in einer Ausbeute von 65% d. Theorie erhalten.

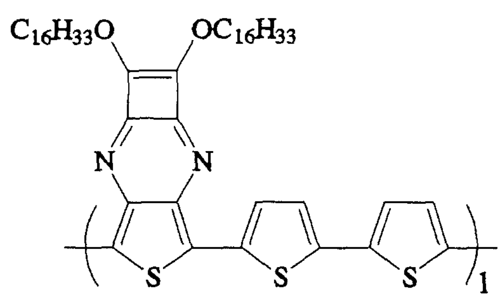

Das Polymer besaß ein $M_w$ von 21.500 und eine Polydispersität von 2,1, jeweils gemessen mit GPC unter Benutzung von Polystyrol als Standard. Das UV-Spektrum des Polymers zeigte Werte für $\lambda_{max}$ bei 298 nm, 495 nm und 920 nm (THF).

## Patentansprüche

1. Polythiophen, enthaltend Struktureinheiten der allgemeinen Formeln (I) und (II)

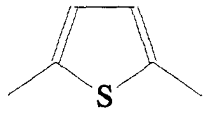

(I)

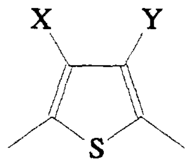

(II)

wobei

X und Y unabhängig voneinander gleich oder verschieden sein können und eine lineare oder verzweigtkettige $C_1$- bis $C_{22}$-Alkylgruppe; eine lineare oder verzweigtkettige $C_1$- bis $C_{22}$-Alkoxygruppe; eine lineare oder verzweigtkettige $C_1$- bis $C_{22}$-Alkyloxyalkylgruppe; eine lineare oder verzweigtkettige $C_1$- bis $C_{22}$-Acylgruppe; eine lineare oder verzweigtkettige $C_1$- bis $C_{22}$-Thioacylgruppe; eine lineare oder verzweigtkettige $C_1$-bis $C_{22}$-Thioacyloxygruppe; eine lineare oder verzweigtkettige $C_1$- bis $C_{22}$-Acyloxygruppe; eine $C_5$- bis $C_8$-Cycloalkylgruppe, eine $C_6$- bis $C_{18}$-Arylgruppe oder eine $C_5$- bis $C_8$-heterocyclische Gruppe, die jeweils wiederum mit einer oder mehreren linearen oder verzweigtkettigen $C_1$-bis $C_{22}$-Alkylgruppe(n), einer oder mehreren linearen oder verzweigtkettigen $C_1$- bis $C_{22}$-Alkoxygruppe(n), einer oder mehreren linearen oder verzweigtkettigen $C_1$- bis $C_{22}$-Alkyloxyalkylgruppe(n), einer oder mehreren linearen oder verzweigtkettigen $C_1$- bis $C_{22}$-Acylgruppe(n) oder einer oder mehreren linearen oder verzweigtkettigen $C_1$- bis $C_{22}$-Thioacylgruppe(n) substituiert sein können; $NO_2$; oder $NHR^1$, wobei $R^1$ gleich oder verschieden sein kann und jeweils Wasserstoff; oder eine lineare oder verzweigtkettige $C_1$- bis $C_{22}$-Alkylgruppe, eine lineare oder verzweigtkettige $C_1$- bis $C_{22}$-Alkoxygruppe, eine lineare oder verzweigtkettige $C_1$- bis $C_{22}$-Alkyloxyalkylgruppe, eine lineare oder verzweigtkettige $C_1$- bis $C_{22}$-Acylgruppe oder eine lineare oder verzweigtkettige $C_1$-bis $C_{22}$-Thioacylgruppe ist, bedeuten, oder X und Y zusammen mit den Atomen, an die sie gebunden sind, ein Kohlenstoff enthaltendes Ringsystem bilden, das neben Kohlenstoff Stickstoff (N)-, Sauerstoff (O)-, Schwefel (S)- oder Phosphor (P)-Heteroatome oder Mischungen zweier oder mehrerer dieser Heteroatome aufweist,

wobei

dieses Ringsystem wiederum an dem (den) Kohlenstoffatom(en), dem (den) Stickstoffatom(en) oder dem (den) Phosphoratom(en) jeweils mit einer Gruppe Z substituiert sein kann, in der jedes Z unabhängig voneinander eine Gruppe wie oben für X und Y definiert bedeutet, oder zwei benachbarte Gruppen Z zusammen einen durch eine der folgenden allgemeinen Formeln (III) bis (VI) dargestellten Reste bilden

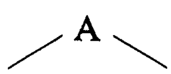

(III)

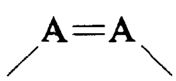

(IV)

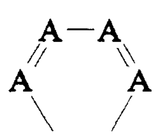

(V)

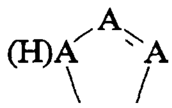

(VI)

in denen A Kohlenstoff (C), Stickstoff (N), Phosphor (P) oder Mischungen zweier oder mehrerer dieser Atome bedeutet,
wobei, sofern A Kohlenstoff ist, jedes dieser A entweder ein Wasserstoffatom trägt oder wiederum wie oben für X und Y definiert, substituiert sein kann, erhältlich mittels
der Umsetzung nach Stille, wobei 2,5-Dihalogenthiophen oder 2,5-Ditriflatthiophen und an den dem Schwefel benachbarten Kohlenstoffatomen bis(Trialkylzinn)-substituierte Thiophenderivate, die der oben definierten Struktureinheit (II) entsprechen, miteinander in geeigneten Lösungsmitteln in Anwesenheit von geeigneten Pd(0)- oder Pd(II)-Komplexen als Katalysator umgesetzt werden oder wobei 2,5-Bis(trialkylzinn)thiophen und an den dem Schwefel benachbarten Kohlenstoffatomen bis(Halogen)- oder bis(Triflat)-substituierte Thiophenderivate, die der oben definierten Struktureinheit (II) entsprechen, miteinander in geeigneten Lösungsmitteln in Anwesenheit von geeigneten Pd(0)- oder Pd(II)-Komplexen als Katalysator umgesetzt werden,
oder,
der Suzuki-Umsetzung, in der 2,5 Dihalogen- oder 2,5-Triflat-substituierte Thiophene, die der Struktureinheit (II) entsprechen, mit Thiophendiborsäure oder Thiophendiborsäureestern in Anwesenheit einer Base und eines Palladium-Komplexes der Struktur $PdL_4$ (L= Ligant), oder 2,5-Dihalogen- oder 2,5-Triflat-substituiertes Thiophen mit einem Diborsäure- oder Diborsäureesterderivat eines substituierten Thiophens, das der Struktureinheit (II) entspricht, in Anwesenheit einer Base und eines Palladium-Komplexes, wie oben definiert, umgesetzt werden.

**2.** Polythiophen nach Anspruch 1, enthaltend Struktureinheiten der allgemeinen Formeln (VII) oder (VIII) oder Mischungen dieser

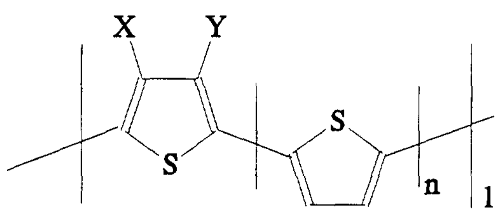

(VII)

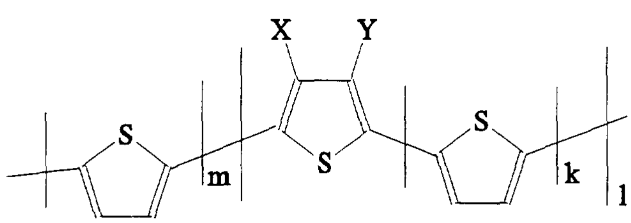

(VIII)

in denen X und Y wie in Anspruch 1 definiert sind,
n, m und k jeweils unabhängig voneinander eine ganze Zahl von 1 bis 10 bedeuten, und
l eine ganze Zahl von 1 bis 3000 bedeutet.

**3.** Polythiophen nach Anspruch 1 oder 2, in dem die Struktureinheit (II) ausgewählt wird aus der Gruppe bestehend aus den Resten der folgenden allgemeinen Formeln

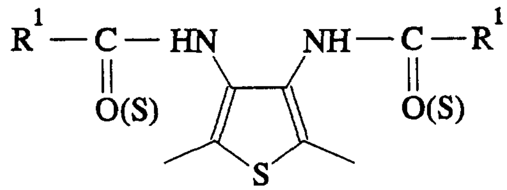

(IIa)

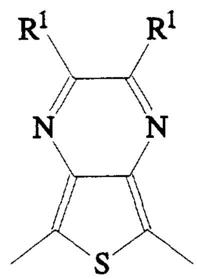

(IIb)

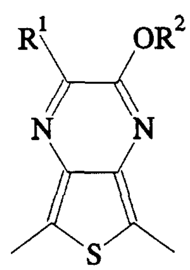

(IIc)

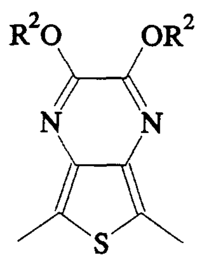

(IId)

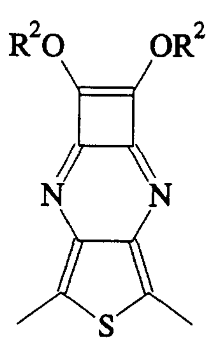

(IIe)

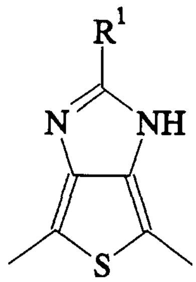

(IIf)

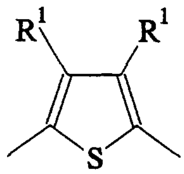

(IIg)

und Mischungen dieser,
in denen $R^1$ wie in Anspruch 1 definiert ist und $R^2$ $CHR^1_2$ oder $CH_2R^1$ ist, mit der Maßgabe, daß Reste der allgemeinen Formel (IIg) mit $R^1$ in der Bedeutung "Wasserstoff" ausgeschlossen sind.

**4.** Verfahren zur Herstellung eines Polythiophens gemäß einem der Ansprüche 1 bis 3, wobei 2,5-Dihalogenthiophen oder 2,5-Ditriflatthiophen und an den dem Schwefel benachbarten Kohlenstoffatomen bis(Trialkylzinn)substituierte Thiophenderivate, die der in Anspruch 1 definierten Struktureinheit (II) entsprechen, miteinander in geeigneten Lösungsmitteln in Anwesenheit von geeigneten Pd(0)- oder Pd(II)-Komplexen als Katalysator umgesetzt werden.

**5.** Verfahren zur Herstellung eines Polythiophens gemäß einem der Ansprüche 1 bis 3, dadurch gekennzeichnet, daß 2,5-Bis(trialkylzinn)thiophen und an den dem Schwefel benachbarten Kohlenstoffatomen bis(Halogen)- oder bis(Triflat)-substituierte Thiophenderivate, die der in Anspruch 1 definierten Struktureinheit (II) entsprechen, miteinander in geeigneten Lösungsmitteln in Anwesenheit von geeigneten Pd(0)- oder Pd(II)-Komplexen als Katalysator umgesetzt werden.

**6.** Verwendung eines undotierten oder dotierten Polythiophens gemäß mindestens einem der Ansprüche 1 bis 3 zur antistatischen Ausrüstung von den elektrischen Strom nicht oder nur schlecht leitenden Substanzen; als elektrisch leitfähige Folien; als Halbleiterfolien; als Zusatzstoff für aktive Elektroden; als LED's; als organische Transistoren; oder als Kondensatoren.

**7.** Verfahren zur antistatischen Ausrüstung eines den elektrischen Strom nicht oder nur schlecht leitenden Substrats durch Aufbringen einer Schicht enthaltend ein elektrisch leitfähiges organisches Polymer auf die Oberfläche des Substrats, wobei man auf der Oberfläche des Substrats durch Polymerisation eine Schicht mindestens eines Polythiophens erzeugt, das Struktureinheiten der allgemeinen Formeln (I) und (II), wie in Anspruch 1 definiert, enthält.

**8.** Elektrisch leitfähiges Material, enthaltend mindestens ein Polythiophen gemäß mindestens einem der Ansprüche 1 bis 3.

## Claims

**1.** A polythiophene, comprising structural units of the general formulae (I) and (II)

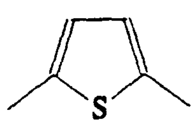

(I)

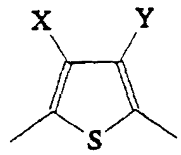

(II)

where

X and Y independently of one another can be identical or different and are a linear or branched-chain $C_1$- to $C_{22}$-alkyl group; a linear or branched-chain $C_1$- to $C_{22}$-alkoxy group; a linear or branched-chain $C_1$- to $C_{22}$-alkyloxyalkyl group; a linear or branched-chain $C_1$- to $C_{22}$-acyl group; a linear or branched-chain $C_1$- to $C_{22}$-thioacyl group; a linear or branched-chain $C_1$- to $C_{22}$-thioacyloxy group; a linear or branched-chain $C_1$- to $C_{22}$-acyloxy group; a $C_5$- to $C_8$-cycloalkyl group, a $C_6$- to $C_{18}$-aryl group or a $C_5$- to $C_8$-heterocyclic group, each of which in turn can be substituted by one or more linear or branched-chain $C_1$- to $C_{22}$-alkyl groups, one or more linear or branched-chain $C_1$- to $C_{22}$-alkoxy groups, one or more linear or branched-chain $C_1$- to $C_{22}$-alkyloxyalkyl groups, one or more linear or branched-chain $C_1$- to $C_{22}$-acyl groups or one or more linear or branched-chain $C_1$- to $C_{22}$-thioacyl groups; $NO_2$; or $NHR^1$, where $R^1$ can be identical or different and is in each case hydrogen; or a linear or branched-chain $C_1$- to $C_{22}$-alkyl group, a linear or branched-chain $C_1$- to $C_{22}$-alkoxy group, a linear or branched-chain $C_1$- to $C_{22}$-alkyloxyalkyl group, a linear or branched-chain $C_1$- to $C_{22}$-acyl group or a linear or branched-chain $C_1$- to $C_{22}$-thioacyl group, or X and Y, together with the atoms to which they are bonded, form a carbon-containing ring system which in addition to carbon contains nitrogen (N), oxygen (O), sulfur (S) or phosphorus (P) heteroatoms or mixtures of two or more of these heteroatoms, where
this ring system can in turn be substituted on the carbon atom(s), the nitrogen atom(s) or the phosphorus atom (s) in each case by a group Z, where each Z independently of one another is a group as defined above for X and Y, or two adjacent groups Z together form a radical represented by one of the following general formulae (III) to (VI)

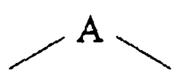

(III)

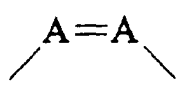

(IV)

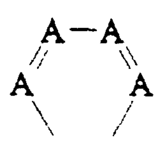

(V)

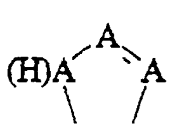

(VI)

in which A is carbon (C), nitrogen (N), phosphorus (P) or mixtures of two or more of these atoms,
where, if A is carbon, each of these As can either carry a hydrogen atom or can in turn be substituted as defined above for X and Y, obtainable by means of the reaction according to Stille, where 2,5-dihalothiophene or 2,5-ditriflatethiophene and thiophene derivatives which are bis(trialkyltin)-substituted on the carbon atoms

adjacent to the sulfur, which correspond to the structural unit (II) defined above, are reacted with one another in suitable solvents in the presence of suitable Pd(0) or Pd(II) complexes as catalyst, or where 2,5-bis(trialkyltin) thiophene and thiophene derivatives which are bis(halo)- or bis(triflate)-substituted on the carbon atoms adjacent to the sulfur, which correspond to the structural unit (II) defined above, are reacted with one another in suitable solvents in the presence of suitable Pd(0) or Pd(II) complexes as catalyst,

or

the Suzuki reaction in which 2,5-dihalo- or 2,5-triflate-substituted thiophenes, which correspond to the structural unit (II), are reacted with thiophenediboric acid or thiophenediboric acid esters in the presence of a base and of a palladium complex of the structure $PdL_4$ (L = ligand), or 2,5-dihalo- or 2,5-triflate-substituted thiophene is reacted with a diboric acid or diboric acid ester derivative of a substituted thiophene which corresponds to the structural unit (II) in the presence of a base and of a palladium complex as defined above.

2. A polythiophene as claimed in claim 1, comprising structural units of the general formula (VII) or (VIII)

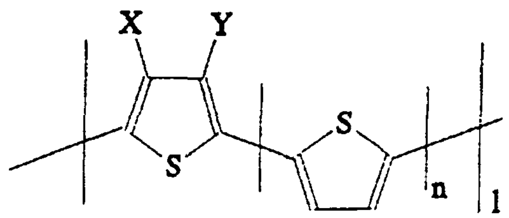

(VII)

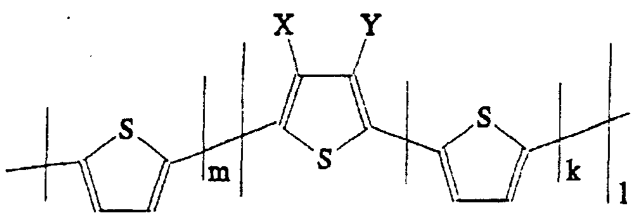

(VIII)

or mixtures of these in which

X and Y are as defined in claim 1,
n, m and k each independently of one another are an integer from 1 to 10, and
l is an integer from 1 to 3000.

3. A polythiophene as claimed in claim 1 or 2, in which the structural unit (II) is selected from the group consisting of the radicals of the following general formulae

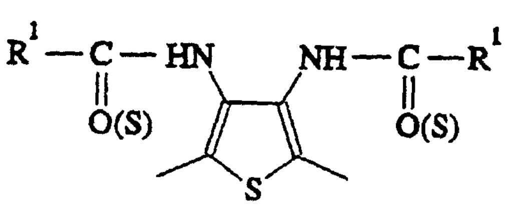

(IIa)

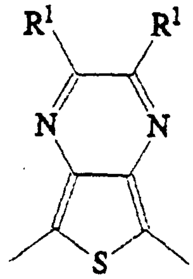

(IIb)

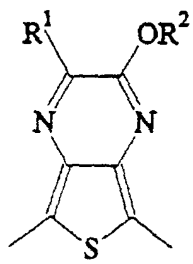

(IIc)

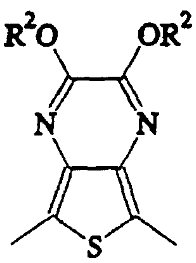

(IId)

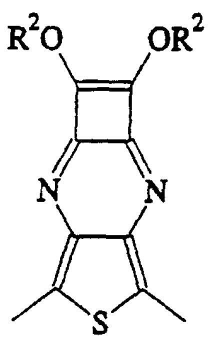

(IIe)

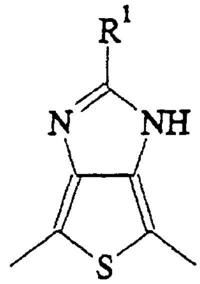

(IIf)

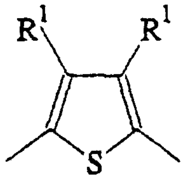

(IIg)

and mixtures of these,
in which $R^1$ is as defined in claim 1, and $R^2$ is $CHR^1_2$ or $CH_2R^1$, with the proviso that radicals of the general formula (IIg) with $R^1$ meaning "hydrogen" are excluded.

**4.** A process for preparing a polythiophene as claimed in any of claims 1 to 3, 2,5-dihalothiophene or 2,5-ditriflatethiophene and thiophene derivatives which are bis(trialkyltin)-substituted on the carbon atoms adjacent to the sulfur, which correspond to the structural unit (II) defined in claim 1, being reacted with one another in suitable solvents in the presence of suitable Pd(0) or Pd(II) complexes as catalyst.

**5.** A process for preparing a polythiophene as claimed in any of claims 1 to 3, which comprises reacting 2,5-bis(trialkyltin)thiophene and thiophene derivatives which are bis(halo)- or bis(triflate)-substituted on the carbon atoms adjacent to the sulfur, which correspond to the structural unit (II) defined in claim 1, with one another in suitable solvents in the presence of suitable Pd(0) or Pd(II) complexes as catalyst.

**6.** The use of an undoped or doped polythiophene as claimed in at least one of claims 1 to 3 for the antistatic finishing of substances which do not or only poorly conduct electrical current; as electrically conductive films; as semiconductor films; as additive for active electrodes; as LEDs; as organic transistors; or as capacitors.

**7.** A process for the antistatic finishing of a substrate which does not conduct or only poorly conducts electrical current by applying a layer comprising an electrically conductive organic polymer to the surface of the substrate, with a layer of at least one polythiophene which contains structural units of the general formulae (I) and (II) as defined in claim 1 being produced on the surface of the substrate by polymerization.

**8.** An electrically conductive material, comprising at least one polythiophene as claimed in at least one of claims 1 to 3.

## Revendications

**1.** Polythiophène, contenant des unités structurales de formules générales (I) et (II)

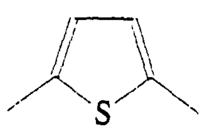

(I)

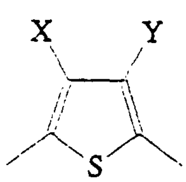

(II)

où

X et Y, indépendamment l'un de l'autre, peuvent être identiques ou différents, et représentent un groupe alkyle en $C_1$ à $C_{22}$ linéaire ou ramifié; un groupe alcoxy en $C_1$ à $C_{22}$ linéaire ou ramifié; un groupe alkyloxyalkyle en $C_1$ à $C_{22}$ linéaire ou ramifié; un groupe acyle en $C_1$ à $C_{22}$ linéaire ou ramifié; un groupe thioacyle en $C_1$ à $C_{22}$

linéaire ou ramifié; un groupe thioacyloxy en $C_1$ à $C_{22}$ linéaire ou ramifié; un groupe acyloxy en $C_1$ à $C_{22}$ linéaire ou ramifié; un groupe cycloalkyle en $C_5$ à $C_8$, un groupe aryle en $C_6$ à $C_{18}$ ou un groupe hétérocyclique en $C_5$ à $C_8$, qui peuvent à leur tour être substitués à chaque fois par un ou plusieurs groupe(s) alkyle en $C_1$ à $C_{22}$ linéaires ou ramifiés, un ou plusieurs groupe(s) alcoxy en $C_1$ à $C_{22}$ linéaires ou ramifiés, un ou plusieurs groupe(s) alkyloxyalkyle en $C_1$ à $C_{22}$ linéaires ou ramifiés, un ou plusieurs groupe(s) acyle en $C_1$ à $C_{22}$ linéaires ou ramifiés ou un ou plusieurs groupe(s) thioacyle en $C_1$ à $C_{22}$ linéaires ou ramifiés; $NO_2$; ou $NHR^1$, tandis que les $R^1$ peuvent être identiques ou différents et pour chacun l'hydrogène; ou un groupe alkyle en $C_1$ à $C_{22}$ linéaire ou ramifié, un groupe alcoxy en $C_1$ à $C_{22}$ linéaire ou ramifié, un groupe alkyloxyalkyle en $C_1$ à $C_{22}$ linéaire ou ramifié, un groupe acyle en $C_1$ à $C_{22}$ linéaire ou ramifié ou un groupe thioacyle en $C_1$ à $C_{22}$ linéaire ou ramifié, ou X et Y forment, conjointement avec les atomes auxquels ils sont liés, un système cyclique contenant du carbone, qui possède, outre le carbone, des hétéroatomes d'azote (N), d'oxygène (O), de soufre (S) ou de phosphore (P) ou des mélanges de deux ou plusieurs de ces hétéroatomes,

tandis que

ce système cyclique peut à son tour être substitué sur le(s)atome(s) de carbone, le(s) atome(s) d'azote ou le (s) atomes(s) de phosphore par un groupe Z, dans lequel chaque Z désigne, indépendamment l'un de l'autre, un groupe tel qu'indiqué plus haut pour X et Y, ou deux groupes Z voisins forment ensemble un reste représenté par les formules générales (III) à (VI) suivantes

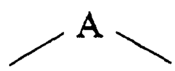

(III)

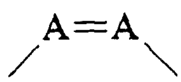

(IV)

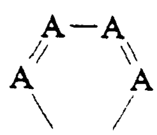

(V)

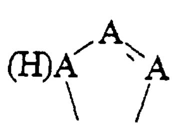

(VI)

dans lesquelles A représente le carbone (C), l'azote (N), le phosphore (P) ou des mélanges de deux ou plusieurs de ces atomes,

tandis que, dans la mesure où A est le carbone, chacun de ces A soit porte un atome d'hydrogène, soit peut être substitué à son tour comme défini pour X et Y,

pouvant être obtenu par

la réaction selon Stille, dans laquelle on fait réagir du 2,5-dihalogénothiophène ou du 2,5-ditriflattthiophène et des dérivés de thiophène substitués par du bis(trialkylétain) sur les atomes de carbone voisins du soufre, qui correspondent à l'unité structurale (II) définie plus haut, entre eux dans des solvants appropriés, en présence de complexes appropriés de Pd(0) ou de Pd(II) comme catalyseur, ou dans laquelle on fait réagir du 2,5-bis(trialkylétain)thiophène et des dérivés de thiophène bis(halogéno)- ou bis(triflat)-substitués sur les atomes de carbone voisins du soufre, qui correspondent à l'unité structurale (II) définie plus haut, entre eux dans des solvants appropriés, en présence de complexes de Pd(0) ou de Pd(II) appropriés, comme catalyseur,

ou

la réaction de Suzuki, dans laquelle on fait réagir des thiophènes 2,5-dihalogéno- ou 2,5-triflat-substitués, qui correspondent à l'unité structurale (II), avec de l'acide thiophènediborique ou des esters d'acide thiophènediborique en présence d'une base et d'un complexe de palladium de structure $PdL_4$ (L = ligand), ou de thiophène 2,5-dihalogéno- ou 2,5-triflat-substitué, avec un dérivé d'acide diborique ou d'ester d'acide diborique d'un thiophène substitué, qui correspond à l'unité structurale (II), en présence d'une base et d'un complexe de palladium, tel que défini plus haut.

**2.** Polythiophène selon la revendication 1, contenant des unités structurales répondant aux formules générales (VII) ou (VIII) ou de mélanges de celles-ci

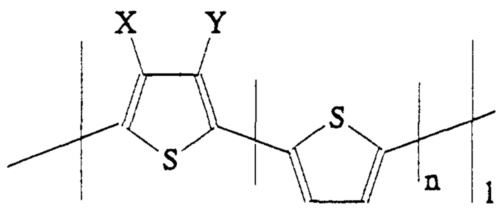

(VII)

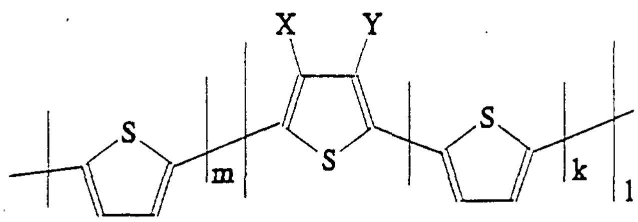

(VIII)

dans lesquels

X et Y sont définis comme dans la revendication 1,
n, m et k, dans chaque cas indépendamment l'un de l'autre, représentent un nombre entier de 1 à 10, et
l désigne un nombre entier de 1 à 3000.

**3.** Polythiophène selon la revendication 1 ou 2, dans lequel l'unité structurale (II) est choisie dans le groupe consistant en les restes des formules générales

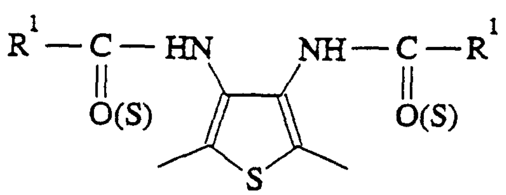

(IIa)

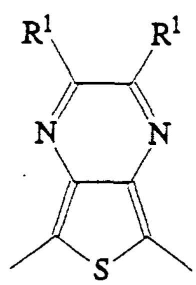

(IIb)

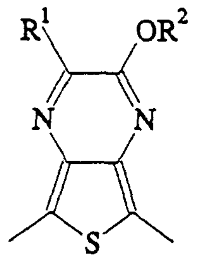

(IIc)

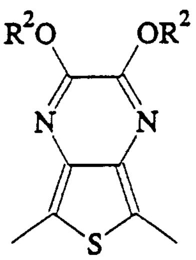

(IId)

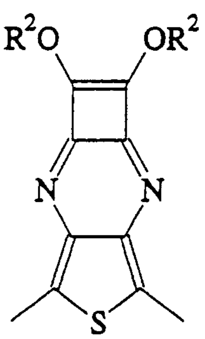

(IIe)

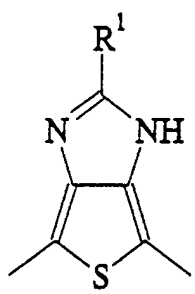

(IIf)

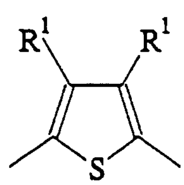

(IIg)

et de mélanges de celles-ci,
dans lesquelles $R^1$ est défini comme dans la revendication 1 et $R^2$ est $CHR^1_2$ ou $CH_2R^1$, avec pour condition que les restes de formule générale (IIg) avec $R^1$ ayant la signification "hydrogène" sont exclus.

4. Procédé pour la préparation d'un polythiophène selon l'une des revendications 1 à 3, dans lequel on fait réagir du 2,5-dihalogénothiophène ou du 2,5-ditriflatthiophène et des dérivés de thiophène bis(trialkylétain)-substitués sur les atomes de carbone voisins du soufre, qui correspondent à l'unité structurale (II) définie dans la revendication 1, ensemble dans des solvants appropriés, en présence de complexes de Pd(0) ou Pd(II) appropriés, comme catalyseur.

5. Procédé pour la préparation d'un polythiophène selon l'une des revendications 1 à 3, caractérisé par le fait que l'on fait réagir du 2,5-bis(trialkylétain)thiophène et des dérivés de thiophène bis(halogéno)- ou bis(triflat)-substitués sur les atomes de carbone voisins du soufre, qui correspondent à l'unité structurale (II) définie dans la revendication 1, ensemble dans des solvants appropriés, en présence de complexes de Pd(0) ou Pd(II) appropriés, comme catalyseur.

6. Utilisation d'un polythiophène non-dopé ou dopé selon au moins l'une des revendications 1 à 3 pour l'apprêtage antistatique de substances non-conductrices ou mauvaises conductrices du courant électrique; comme feuilles électriquement conductrices; comme feuilles semi-conductrices; comme additif pour électrodes actives; comme LEDS; comme transistors organiques; ou comme condensateurs.

7. Procédé pour l'apprêtage antistatique d'un substrat non-conducteur ou mauvais conducteur du courant électrique pour le dépôt d'une couche contenant un polymère organique électriquement conducteur sur la surface du substrat, tandis qu'on forme sur la surface du substrat, par polymérisation, une couche d'au moins un polythiophène, qui contient des unités structurales répondant aux formules générales (I) et (II), telles que définies dans la revendication 1.

8. Matériau électriquement conducteur, contenant au moins un polythiophène selon au moins l'une de revendications 1 à 3.